# EUROPÄISCHE PATENTSCHRIFT

(11) **EP 1 995 471 B1**
(45) Veröffentlichungstag und Bekanntmachung des Hinweises auf die Patenterteilung: **19.01.2011**
(21) Anmeldenummer: 08000329.6
(22) Anmeldetag: 10.01.2008
(51) Int. Cl.: F15B 15/26

(54) **Verriegelungszylinder mit Fluidgleitlagerung**
Locking cylinder with fluid bearing
Cylindre verrouillable à palier fluidique

(30) Priorität: 25.05.2007 DE 102007024736
(43) Veröffentlichungstag der Anmeldung: 26.11.2008
(73) Patentinhaber: Neumeister Hydraulik GmbH, 74196 Neuenstadt (DE)
(72) Erfinder: Weis, Michael, 74081 Heilbronn (DE)
(74) Vertreter: Geitz Truckenmüller Lucht

(56) Entgegenhaltungen:
- EP-A2- 1 538 344
- GB-A- 1 349 285

## Beschreibung

Die Erfindung betrifft einen Verriegelungszylinder gemäß dem Oberbegriff des Anspruches 1.

Derartige Verriegelungszylinder sind aus den deutschen Patenten DE 103 56 597 B3, DE 103 56 598 B3 und DE 103 56 596 B3 sowie der deutschen Patentanmeldung DE 10 2005 016 090 A1 und den parallelen europäischen Patentanmeldungen EP 1 541 876 A2, EP 1 538 344 A2, EP 1 538 343 A2 und EP 1 710 449 A1 sowie der deutschen Patentanmeldung DE 10 2004 022 203 B3 der Schutzrechtsinhaberin bekannt geworden. Bei dem hier vorliegenden Schutzrecht handelt es sich um eine Weiterentwicklung der vorgenannten Verriegelungszylinder, so das der Einfachheit halber und zur Vermeidung von Wiederholungen der Inhalt dieser Schutzrechte an dieser Stelle vollinhaltlich aufgenommen wird.

Bei all diesen Verriegelungszylindern werden ein erstes Axiallager und ein zweites Axiallager eingesetzt, die als Nadel-Wälzlager gestaltet und die dazu bestimmt sind, in der Ausfahrrichtung des Kolbens und in der entgegen gesetzten Einfahrrichtung des Kolbens auf die Spindel wirkende Axialkräfte aufzunehmen. Das zweite, untere Nadel-Wälzlager ist durch in der Ausfahrrichtung wirkende Federkräfte mehrerer, hintereinander geschalteter Tellerfedern beaufschlagt und in Richtung der Längsachse des Zylinders bewegbar, so dass eine federnde Lagerung der relativ zu dem Zylinder axial beweglichen Spindel bewirkt ist. Dieses zweite Wälz-Nadellager nimmt im Normalbetrieb, bei welchem der Kolben relativ zu dem Zylinder in Ein- bzw. Ausfahrrichtung ein- bzw. ausgefahren wird oder bei welchem der Kolben relativ zu dem Zylinder in einer gewünschten Haltestellung gehalten wird, die dabei in der Einfahrrichtung auf die Spindel wirkenden Axialkräfte auf.

Zur Aufnahme von etwaig auftretenden Überlast-Axialkräften, wie sie insbesondere bei einer Leckage im Bereich einer oder bei einem Bruch einer Druckmittelleitung auftreten können und welche zu einer Zerstörung des einen nur geringen Platz beanspruchenden, relativ kleinen und eine entsprechend geringe Tragfähigkeit aufweisenden zweiten Wälz-Nadellagers führen könnten, ist ein von dem zweiten Axiallager verschiedener zylindrischer Stützkörper an der Spindel befestigt. Dieser ist dazu bestimmt, derartige in der Einfahrrichtung auf die Spindel wirkenden Überlast-Axialkräfte aufzunehmen. In einem derartigen Überlastfall wird die Spindel unter gleichzeitigem Zusammendrücken der Tellerfedern entgegen deren Federkräfte in Einfahrrichtung so lange verschoben, bis der Stützkörper mit der an seinem freien Ende ausgebildeten Stützfläche auf der dieser gegenüber liegenden Stützfläche eines Kopfes des Zylinders anliegt und sich dort abstützt, so dass dann die wirkenden Überlast-Axialkräfte von der Spindel über den Stützkörper auf den Kopf des Zylinders übergeleitet werden, ohne dass das Nadellager beschädigt wird.

Diese Konstruktion ist zwar besonders Platz sparend, jedoch vergleichsweise aufwändig. Ferner können dabei Montagefehler durch falsches Schichten der Tellerfedern auftreten. Außerdem kann es bedingt durch Fertigungstoleranzen der Tellerfedern im Extremfall zu einem wiederholten oder gar ständigen Aufstehen des Stützkörpers kommen, was im Aufstandsbereich zu Verschleiß oder gar zu einem Fressen des Gleitlagers führen kann. Dabei kann es zur Bildung und Ablösung von Metallspänen oder -partikeln kommen. Dadurch kann die Funktion des Verriegelungsaggregates beeinträchtigt werden, bis hin zu einer Blockade der Verriegelungsbolzen, was ein unakzeptables Sicherheitsrisiko bedeutet.

Ein Verriegelungszylinder der eingangs genannten Art ist auch aus der JP 083 034 10 A bekannt geworden. Dort ist als Verriegelungskörper ein großvolumiger Sperrkolben vorgesehen, durch dessen zentrale Durchgangsöffnung sich ein Schaft einer Kugelrollspindel erstreckt und der mit Hilfe eines fluiden Druckmittels entgegen der Federkraft einer Druckfeder von einer Verriegelungsstellung in einer Entriegelungsstellung überführbar ist. Der Sperrkolben ist mit einer Vielzahl von konzentrisch zu der Spindel angeordneten und längs der Spindel aufragenden Zähnen versehen. In der Verriegelungsstellung stehen die Zähne des Sperrkolbens in Eingriff mit gegenüberliegenden Zähnen eines Zahnrades, das drehfest mit der dieses konzentrisch aufnehmenden Spindel verbunden ist. Dadurch ist eine Art Zahn-Ringkupplung ausgebildet. Der Sperrkolben weist an der von seinen Zähnen wegweisenden Seite einen Hohlabschnitt mit einer Innenverzahnung auf, deren Zahnflanken sich parallel zu der Drehachse der Spindel erstrecken. Diese Innenverzahnung steht im Eingriff mit einer passenden Außenverzahnung eines Zahnritzels, das einteilig mit einem Abschlussdeckel verbunden ist, der auf den Zylinder aufgeschraubt ist. Auf diese Weise ist der Sperrkolben parallel zu der Drehachse der Kugelrollspindel verschiebbar, jedoch gegen eine Drehung um die Spindelachse blockiert gelagert. Sowohl an dem Außenumfang des Sperrkolbens als auch an seinem Innenumfang ist jeweils eine umlaufende Dichtung vorgesehen, die in Ringnuten des Sperrkolbens aufgenommen sind. Diese Dichtungen dichten einen zum Zwecke einer Entriegelung mit Druckmittel beaufschlagbaren Druckmittelraum zu dem Abschlussdeckel des Zylinders hin unter Anlage an dem Innenumfang des Zylinders einerseits und an dem Außenumfang des Spindelschafts andererseits ab. Die Kugelrollspindel ist an dem Zylinder über ein Axial-Kugellager und ein an dem freien Ende ihres Spindelschafts angeordnetes Axial-Gleitlager derart eingespannt gelagert, dass eine Bewegung der Spindel in Längsrichtung des Zylinders nicht möglich, jedoch eine Drehung der Spindel um ihre Längsachse zugelassen ist. Hierzu stützt sich das abgerundete freie Ende des Spindelschafts gleitend auf einer Innenfläche des Abschlussdeckels des Zylinders ab und das Axial-Kugellager ist mithilfe einer auf ein Außengewinde des Spindelschafts der Kugelrollspindel aufgeschraubten Mutter über das zwischenliegende Zahnrad gegen einen sich quer zu dem Zylinder nach innen erstreckenden, einteilig mit dem Zylinder verbundenen Absatz fixiert.

Diese Konstruktion ist aufwändig und deren Verriegelungseinheit beansprucht vergleichsweise viel Platz. Zur Entriegelung bzw. Verriegelung des konstruktionsbedingt großen und kompakten und deshalb gewichtigen Sperrkolbens werden vergleichsweise große Kräfte benötigt und/oder es müssen vergleichsweise lange Ent- bzw. Verriegelungszeiten in Kauf genommen werden, was ebenfalls ein entsprechendes Sicherheitsrisiko bedeutet. Der Sperrkolben muss an seinem Außenumfang und an seinem Innenumfang mit umlaufenden Dichtungen abgedichtet werden, was beim Verschieben des Sperrkolbens zum Zwecke der Ver- oder Entriegelung zu entsprechenden Reibungskräften führt, wodurch der Wirkungsgrad dieses Verriegelungszylinders begrenzt ist. Die Steuerung der den Sperrkolben aufweisenden Verriegelungseinheit und die Steuerung der Bewegung des Kolbens erfolgen bei dieser Konstruktion über mechanisch gekoppelte Wegeventile derart, dass es bei dem Anheben oder bei dem Absenken der Last zu einem unerwünschten Voreilen des Kolbens kommen kann. Dies bedeutet eine schwer kontrollierbare Kolbenbewegung. Insbesondere bei erhöhten Drücken bzw. Kolbengeschwindigkeiten kann es zu einer Kavitation an der Kolbendichtung und der Kolbenstange kommen. Dies bedeutet ein Sicherheitsrisiko und begrenzt die Lebensdauer entsprechend. Diese Konstruktion ist ferner auf Anwendungen begrenzt, bei denen nur vergleichsweise kleine Lasten angehoben werden können. Bei größeren Lasten kann es zu einem erheblichen Verschleiß bis hin zu einem Fressen des Gleitlagers kommen. Dadurch kann es zur Bildung von Metallspänen oder -partikeln kommen, welche die Funktion des Verriegelungsaggregates, insbesondere durch ein Verklemmen des Sperrkolbens, beeinträchtigen können, bis hin zu einer Blockade des Sperrkolbens. Dies bedeutet ein unakzeptables Sicherheitsrisiko.

Es ist deshalb eine Aufgabe der Erfindung, einen Verriegelungszylinder zur Verfügung zu stellen, der bei einfacher, Platz sparender und robuster Konstruktion sowie einfacher und fehlerunanfälliger Montage kostengünstig herstellbar ist und der auch bei großen Lasten und/oder großen Kolbengeschwindigkeiten eine hohe Betriebssicherheit über eine lange Zeit ermöglicht.

Diese Aufgabe wird insbesondere durch die Merkmale des Anspruches 1 gelöst.

Demgemäß kann die Erfindung einen Verriegelungszylinder mit einem Zylinder und einem Kolben betreffen, der mithilfe eines einer Seite des Kolbens über einen Arbeitskanal zuführbaren oder beiden Seiten des Kolbens über diesen Seiten zugeordnete Arbeitskanäle zuführbaren fluiden Druckmittels parallel zu der Längsachse des Zylinders in eine erste Richtung, insbesondere in Ausfahrrichtung, und in eine zweite Richtung entgegengesetzt zu der ersten Richtung, insbesondere in Einfahrrichtung, bewegbar ist, und der mit einem Kolbengewinde versehen ist, das unter Ausbildung eines nicht selbsthemmenden Gewindes mit einem Spindelgewinde einer mechanisch verriegelbaren Spindel in Eingriff steht, die um eine parallel zu der Längsachse des Zylinders angeordnete Drehachse drehbar und relativ zu dem Zylinder in Axialrichtung bzw. parallel zu ihrer Drehachse bewegbar ist, wobei wenigstens zwei in einen gegenseitigen Verriegelungseingriff überführbare Verriegelungskörper vorgesehen sind, von denen wenigstens ein erster, vorzugsweise mit einer, insbesondere axial, nach außen offenen Verriegelungsausnehmung gestalteter, Verriegelungskörper drehfest mit bzw. an der Spindel ein- oder mehrteilig verbunden bzw. befestigt, ist und von denen wenigstens ein zweiter Verriegelungskörper mit dem Zylinder verbunden ist, wobei wenigstens einer der Verriegelungskörper relativ zu dem Zylinder, vorzugsweise in Axialrichtung, insbesondere parallel zu der Drehachse der Spindel, bewegbar, insbesondere verschiebbar, vorzugsweise an einem Kopf des Zylinders, an einem Lager gelagert ist und mithilfe einer Federkraft wenigstens einer Feder von einer Entriegelungsstellung, in der die Spindel um ihre Drehachse drehbar ist, in eine Verriegelungsstellung überführbar ist, in welcher er mit einem anderen, einen Gegen-Verriegelungskörper bildenden Verriegelungskörper der besagten Verrieglungskörper unter Ausbildung einer, vorzugsweise formschlüssigen, unidirektionalen oder bidirektionalen Verriegelung in einem Verriegelungseingriff steht, so dass dann eine Drehung der Spindel um ihre Drehachse in wenigstens eine Drehrichtung blockiert ist, und wobei der relativ zu dem Zylinder bewegbare, vorzugsweise als Verriegelungsbolzen, insbesondere als Zylinderbolzen, gestaltete, Verriegelungskörper mithilfe eines einem Entriegelungsraum, vorzugsweise einem Entriegelungsdruckraum, insbesondere der gegebenenfalls vorgesehenen Verriegelungsausnehmung, zuführbaren fluiden Arbeitsmittels, insbesondere Druckmittels, vorzugsweise unter unmittelbarer bzw. direkter Beaufschlagung mit dem fluiden Arbeitsmittel, entgegen der Federkraft der Feder von der Verriegelungsstellung in die Entriegelungsstellung überführbar ist, und wobei die Spindel an wenigstens zwei Axiallagern gelagert ist, von denen ein erstes Axiallager dazu bestimmt ist, in die erste Richtung auf die Spindel wirkende Axialkräfte aufzunehmen, und von denen ein zweites Axiallager dazu bestimmt ist, in die zweite Richtung auf die Spindel wirkende Axialkräfte aufzunehmen, und wobei die Spindel mit einem, vorzugsweise einen kreiszylindrischen Umfang, vorzugsweise Außenumfang, aufweisenden, insbesondere koaxial, vorzugsweise symmetrisch, zu der Drehachse der Spindel ausgebildeten, vorzugsweise an dieser zumindest drehfest befestigten, Stützkörper verbunden oder ausgebildet ist, der eine, vorzugsweise an seinem freien Ende, insbesondere senkrecht zu der Drehachse der Spindel angeordnete, Stützfläche aufweist, der eine mit dem Zylinder verbundene, insbesondere ebenfalls senkrecht zu der Drehachse der Spindel angeordnete, Gegen-Stützfläche gegenüber liegt, wobei der Stützkörper dazu bestimmt ist, über seine Stützfläche in der zweiten Richtung auf die Spindel wirkende Axialkräfte aufzunehmen, und wobei der Stützkörper als Stütz- und Lagerkörper gestaltet ist, wobei dessen als Stütz- und Lagerfläche ausgebildete Stützfläche und die als Gegen-Stütz- und -Lagerfläche ausgebildete Gegen-Stützfläche das zweite Axiallager ausbilden, das als ein Fluid-Gleitlager, insbesondere als ein hydrostatisches Gleitlager, gestaltet ist, das über einen Zuleitungskanal mit einem bzw. mit dem fluiden Druckmittel beaufschlagbar bzw. beaufschlagt ist, wobei das Fluid-Gleitlager gegenüber dem Lager für den relativ zu dem Zylinder bewegbaren Verriegelungskörper mit Hilfe einer, vorzugsweise an dem Stütz- und Lagerkörper anliegenden, Dichtung abgedichtet ist.

Durch die erfindungsgemäßen Maßnahmen ist sowohl während einer Bewegung des Kolbens in der ersten Richtung bzw. in der Ausfahrrichtung oder in der zweiten Richtung bzw. in der Einfahrrichtung, also während einer Drehung der Spindel um ihre Drehachse, als auch beim bzw. während eines Anhaltens des Kolbens und auch in einer Haltestellung des Kolbens eine Ausbildung bzw. Schmierung des druckentlastenden Fluid-Gleitlagers bewirkbar bzw. bewirkt. Zu diesem Zwecke oder unterstützend kann die Stütz- und Lagerfläche des Stütz- und Lagerkörpers zumindest zeitweise, vorzugsweise die überwiegende Zeit, gegebenenfalls auch ständig von der Gegen-Stütz- und Lagerfläche abgehoben sein bzw. werden. Ferner lassen sich durch den Wegfall der bislang eingesetzten Tellerfedern Montagefehler aufgrund eines falschen Schichtens bzw. Anordnens der Tellerfedern ebenso ausschließen wie etwaig auftretende Probleme betreffend einen erhöhten Verschleiß und/oder betreffend die Betriebssicherheit und/oder Langlebigkeit aufgrund von Fertigungstoleranzen der Tellerfedern. Außerdem können nunmehr nicht nur die auf die Spindel im Normalbetrieb, auch im verriegelten Zustand, einwirkenden Axiallasten sondern auch etwaig auftretende erhöhte Axialkräfte, wie sie beispielsweise in Folge einer Leckage im Bereich einer oder bei einem Bruch einer Druckmittelleitung oder bei von außen einwirkenden Stößen, beispielsweise beim Fahren auf schlechten Straßen, oder beim bzw. während eines Anhaltens des Kolbens auftreten können, problemlos aufgenommen werden. Ferner kann nunmehr die Spindel besser geführt werden, so dass etwaig auftretende Kippmomente besser aufgenommen werden können. Außerdem kann bei bzw. mit dieser Konstruktion die Lagerbelastung auf das zweite bzw. untere Axiallager, hier auf das Fluid-Gleitlager, verringert werden. Der Begriff "Fluid-Gleitlager" wird in diesem Schutzrecht mit der Bedeutung eines mit einem Fluid beaufschlagbaren Gleitlagers bzw. eines mit einem Fluid beaufschlagten Gleitlagers verwendet. Das Fluid-Lager kann vorzugsweise als hydrostatisches Lager gestaltet sein. Durch die vorstehenden Maßnahmen wird die Lebensdauer des zweiten bzw. unteren Axiallagers erhöht. Dadurch, dass das Fluid-Gleitlager gegenüber dem Lager für den relativ zu dem Zylinder bewegbaren Verriegelungskörper mit Hilfe einer an dem Stütz- und Lagerkörper anliegenden Dichtung abgedichtet ist, wird verhindert, dass ein etwaig im Bereich des Fluid-Gleitlagers entstehender Abrieb in den Lagerraum bzw. Verriegelungsraum des Lagers für den relativ zu dem Zylinder bewegbaren Verriegelungskörper gelangt. Dadurch wiederum kann dieser etwaig entstehende Abrieb nicht zu einem Verklemmen oder zu einem Festsetzen bzw. zu einer Blockade des relativ zu dem Zylinder beweglichen Verriegelungskörpers an bzw. in dem Lager führen. Dadurch, dass der relativ zu dem Zylinder bewegbare Verriegelungskörper mithilfe eines fluiden Arbeitsmittels entgegen der Federkraft der Feder von seiner Verriegelungsstellung in eine Entriegelungsstellung überführbar ist, in welcher die Spindel um ihre Drehachse drehbar ist, können die relativ zu dem Zylinder beweglichen Verriegelungskörper und damit auch die Spindel hydraulisch entriegelt werden, so dass bei einer Beaufschlagung des Kolbens mit fluidem Druckmittel, der Kolben unter gleichzeitiger Drehung der Spindel relativ zu dem Zylinder bewegt werden kann.

Dabei kann vorgesehen sein, dass der Zuleitungskanal mit dem Arbeitskanal oder mit einem Arbeitskanal der Arbeitskanäle in Fluidverbindung bringbar bzw. fluidverbunden ist.

Ferner kann vorgesehen sein, dass der Zuleitungskanal in eine zwischen dem Zylinder und dem Kolben ausgebildete und von einer Seite des Kolbens begrenzte Arbeitskammer mündet, in welche der Arbeitskanal mündet.

Durch die vorstehenden Maßnahmen kann bei einer Verwendung eines schon bisher eingesetzten, mit mehreren, axial nach außen offenen Verriegelungsausnehmungen versehenen lochscheibenförmigen Ansatzes, beispielsweise in der Form einer Takt- bzw. Lochscheibe, auf die bislang erforderliche Abdichtung zwischen der Spindel und dem auf dieser aufgenommenen lochscheibenformigen Ansatz verzichtet werden, wobei diese Abdichtung bislang bevorzugt durch eine Klebeverbindung, insbesondere durch Verkleben der Gewindegänge des Innengewindes des lochscheibenförmigen Ansatzes mit dem diesem zugeordneten Außengewinde der Spindel bzw. des Spindelschafts. Durch die zuletzt genannte Maßnahme kann außerdem eine einfache, kompakte und Platz sparende Anordnung erreicht werden.

In besonders bevorzugter Weiterbildung kann vorgesehen sein, dass der Zuleitungskanal im Wesentlichen oder ausschließlich in dem Stütz- und Lagerkörper und/oder in der Spindel angeordnet ist bzw. verläuft. Dies ermöglicht eine besonders einfache, kompakte, Platz sparende und robuste Konstruktion, die einfach und kostengünstig herstellbar ist und mit welcher auch hohe Zuleitungsdrücke ohne weitere Maßnahmen möglich sind.

Eine vorteilhafte Schmierung und eine auch über lange Zeit betriebssichere Lagerung kann dadurch erreicht werden, dass der Zuleitungskanal im Bereich der Stütz- und Lagerfläche des Stütz- und Lagerkörpers mündet.

Dies kann noch weiter verbessert werden, wenn der Zuleitungskanal an einer Zuleitungskanalöffnung mündet, deren Öffnungsrand bzw. Öffnungsränder, vorzugsweise im Wesentlichen vollumfänglich oder vollumfänglich, von der Stütz- und Lagerfläche des Stütz- und Lagerkörpers begrenzt ist bzw. werden.

Ferner kann vorgesehen sein, dass der Zuleitungskanal mit einem Axialkanal gestaltet ist, der koaxial, vorzugsweise symmetrisch, insbesondere rotationssymmetrisch, zu der Drehachse der Spindel ausgebildet ist. Dadurch kann der Zuleitungskanal besonders einfach und kostengünstig hergestellt werden und es lassen sich weiter verbesserte Schmierungs- und Lagerverhältnisse erreichen.

Von ganz besonderem Vorteil kann es sein, wenn der Zuleitungskanal mit wenigstens einem in dem Stütz- und Lagerkörper angeordneten, sich quer, vorzugsweise radial, von dem Zuleitungskanal weg erstreckenden Abzweigkanal fluidverbunden ist. Mit anderen Worten kann vorgesehen sein, dass sich der Zuleitungskanal zu dem Fluid-Gleitlager hin in ein oder mehrere Abzweigkanäle verzweigt, die in das Fluid-Gleitlager münden.

Bevorzugt kann vorgesehen sein, dass der Abzweigkanal oder mehrere Abzweigkanäle in einem Außenrandbereich der Stütz- und Lagerfläche und/oder in einem sich an den Außenrandbereich der Stütz- und Lagerfläche anschließenden Randbereich des Stütz- und Lagerkörpers, insbesondere an dem kreiszylindrischen Umfang, insbesondere Außenumfang, des, vorzugsweise kreiszylindrischen, Stütz- und Lagerkörpers 124, mündet bzw. münden. Dadurch kann auch in diesen Randbereichen eine über lange Zeit ausreichende Schmierung ohne Bildung eines nennenswerten bzw. wesentlichen Abriebs und auch eine über lange Zeit ausreichende Benetzung der an dem Stütz- und Lagerkörper anliegenden Dichtung und folglich eine gleich bleibend gute Abdichtung des Fluid-Gleitlagers gegenüber dem Lager bzw. dem Lager- bzw. Verriegelungsraum für den relativ zu dem Zylinder bewegbaren Verriegelungskörper erreicht werden.

Ferner kann vorgesehen sein, dass die Gegen-Stütz- und - Lagerfläche mit einer oder als eine Gleitlagerscheibe gebildet ist. Dadurch lässt sich eine vorteilhafte Paarung der das Fluid-Gleitlager begrenzenden bzw. ausbildenden Stütz- und Lagerflächen, also der Stütz- und Lagerfläche des Stütz- und Lagerkörpers und der Gegen-Stütz- und - Lagerfläche verwirklichen. Die Gleitlagerscheibe kann aus einem gegenüber dem Werkstoff der Stütz- und Lagerfläche des Stütz- und Lagerkörpers weicheren Werkstoff, beispielsweise aus einer Messinglegierung bestehen. Die Stütz- und Lagerfläche des Stütz- und Lagerkörpers kann aus gehärtetem Stahl bestehen.

Ferner kann vorgesehen sein, dass das Fluid-Gleitlager auch mit Hilfe einer bzw. der an dem Stütz- und Lagerkörper anliegenden Dichtung gegenüber dem mit dem fluiden Arbeitsmittel beaufschlagbaren bzw. beaufschlagten Entriegelungsraum abgedichtet ist. Dadurch kann erreicht werden, dass ein etwaiger im Bereich des Fluid-Gleitlagers über der Zeit entstehender Abrieb auch nicht in den Entriegelungsraum gelangen kann, in welchen der relativ zu dem Zylinder bewegliche Verrieglungskörper in seiner Verriegelungsstellung eingreift, so dass es auch dort zu keinen Ansammlungen von Abrieb bzw. zu keinem Verklemmen oder gar Blockieren des relativ zu dem Zylinder bewegbaren Verriegelungskörper kommen kann.

Es kann ferner vorgesehen sein, dass die Dichtung bzw. die Dichtungen als Ringdichtung ausgebildet ist bzw. sind.

Diese Dichtung kann bzw. diese Dichtungen können in einer bzw. jeweils in einer, vorzugsweise nach außen offenen, Ringnut, insbesondere des Stütz- und Lagerkörpers 124 aufgenommen sein. Dadurch kann eine besonders Platz sparende Anordnung erreicht werden, wodurch die wirksame Fläche des Fluid-Gleitlagers nicht beeinträchtigt sondern im Gegenteil sogar noch maximiert werden kann.

Gemäß einer vorteilhaften Ausgestaltung kann vorgesehen sein, dass das Fluid-Gleitlager bei einer Bewegung des Kolbens in der ersten Richtung und bei einer Bewegung des Kolbens in der zweiten Richtung sowie bei bzw. während eines Anhaltens des Kolbens und auch in wenigstens einer, vorzugsweise in jeder, Haltestellung des Kolbens zwischen seinen beiden Maximalstellungen mit dem Druckmittel beaufschlagt ist bzw. wird.

Gemäß einer besonders vorteilhaften Ausgestaltung kann alleine oder in Kombination mit den vorgenannten Maßnahmen vorgesehen sein, dass die Stütz- und Lagerfläche bei einer Bewegung des Kolbens in der ersten Richtung und bei einer Bewegung des Kolbens in der zweiten Richtung sowie bei bzw. während eines Anhaltens des Kolbens und auch in wenigstens einer, vorzugsweise in jeder, Haltestellung des Kolbens zwischen seinen beiden Maximalstellungen zumindest zeitweise, vorzugsweise überwiegend bzw. die überwiegende Zeit, von der Gegen-Stütz- und -Lagerfläche, vorzugsweise im Wesentlichen oder ganz, abgehoben ist bzw. wird.

In weiter besonders bevorzugter Ausgestaltung kann vorgesehen sein, dass die Stütz- und Lagerfläche, vorzugsweise ausschließlich, mit Hilfe eines bzw. des Druckmittels von der Gegen-Stütz- und -Lagerfläche abgehoben ist bzw. wird.

In besonders bevorzugter Ausgestaltung des erfindungsgemäßen Verriegelungszylinders, kann ein den relativ zu dem Zylinder bewegbaren Verriegelungskörper enthaltender Sperrklinkenmechanismus vorgesehen sein, mittels dessen eine mechanische Blockierung der Spindel in einer ersten Drehrichtung um ihre Drehachse erreichbar ist, während die Spindel in einer entgegen gesetzten zweiten Drehrichtung um ihre Drehachse bewegbar ist.

Ferner kann vorgesehen sein, dass der relativ zu dem Zylinder bewegbare Verriegelungskörper, bei dem es sich um den zweiten Verriegelungskörper handeln kann, mithilfe der Federkraft der Feder gegen eine den Gegen-Verriegelungskörper bzw. den ersten Verrieglungskörper begrenzende und um die Drehachse der Spindel umlaufende stufen- bzw. zahnförmige Steuerkante angedrückt ist, wobei der relativ zu dem Zylinder bewegbare Verriegelungskörper und die Stufe bzw. der Zahn der Steuerkante derart aufeinander abgestimmt gestaltet sind, dass der relativ zu dem Zylinder bewegbare Verriegelungskörper bei einer Drehung der Spindel in ihrer ersten Drehrichtung an der Stufe bzw. an dem Zahn in seiner Verriegelungsstellung einrasten bzw. anschlagen kann, um eine mechanische Verriegelung der Spindel zu bewirken, und wobei die Steuerkante bei einer Drehung der Spindel in ihrer entgegen gesetzten zweiten Drehrichtung im Wesentlichen ungehindert an dem relativ zu dem Zylinder bewegbaren Verriegelungskörper entlang laufen kann. Die Spindel ist also in dieser zweiten Drehrichtung mechanisch entriegelt.

Ferner kann vorgesehen sein, dass der Gegen-Verrieglungskörper bzw. der erste Verriegelungskörper, vorzugsweise der mit der Spindel drehfest verbundene Verriegelungskörper, wenigstens eine nach außen offene Verriegelungsausnehmung aufweist, in die der mittels der Federkraft der Feder beaufschlagte und relativ zu dem Zylinder bewegliche Verriegelungskörper eingreifen kann.

Eine besonders einfache, Platz sparende und kostengünstige sowie betriebssichere Konstruktion kann erreicht werden, wenn die Verriegelungsausnehmung mit einer eine bzw. die Steuerkante enthaltenden Auslaufschräge, beispielsweise einer Rampe oder schiefen Ebene, für den relativ zu dem Zylinder beweglichen Verriegelungskörper gestaltet ist.

Ferner kann vorgesehen sein, dass die Verriegelungsausnehmung in Umfangsrichtung einen trapezförmigen Querschnitt aufweist. Dadurch lässt sich eine derartige Verriegelungsausnehmung besonders einfach und kostengünstig herstellen.

Eine besonders Platz sparende Konstruktion in Verbindung mit vorteilhaften Möglichkeiten einer weiter verbesserten Betriebssicherheit kann erreicht werden, wenn die Verriegelungsausnehmung, vorzugsweise axial, also in Längsrichtung des Zylinders, nach außen offen gestaltet ist.

Ferner kann vorgesehen sein, dass die Verriegelungsausnehmung in einem lochscheibenförmigen Ansatz vorgesehen ist, der, vorzugsweise drehfest, mit der Spindel verbunden, insbesondere an dieser befestigt ist. Mit anderen Worten kann dieser Ansatz vorteilhaft zusammen mit der Spindel um deren Drehachse drehen, wenn sich die Spindel um ihre Drehachse dreht.

Die Betriebssicherheit lässt sich weiter erhöhen, wenn mehrere Verriegelungsausnehmungen in Umfangsrichtung bezogen auf die Drehachse der Spindel und beabstandet zueinander angeordnet sind. Dabei ist es besonders vorteilhaft, wenn wenigstens vier, vorzugsweise wenigstens sechs Verriegelungsausnehmungen vorgesehen sind.

Von besonderem Vorteil ist es, wenn der relativ zu dem Zylinder bewegliche Verriegelungskörper parallel zu der Drehachse der Spindel axial verschieblich an einem Kopf des Zylinders gelagert ist und in seiner Verriegelungsstellung in eine axial nach außen offene Verriegelungsausnehmung bzw. in mehrere axial nach außen offene Verriegelungsausnehmungen eingreift.

Eine besonders Platz sparende, kostengünstige und betriebssichere Konstruktion kann erreicht werden, wenn der relativ zu dem Zylinder bewegliche Verriegelungskörper als Verriegelungsbolzen gestaltet ist. Der Verriegelungsbolzen kann vorteilhaft als Zylinderbolzen, insbesondere als kreiszylindrischer Bolzen gestaltet sein.

Von besonderem Vorteil ist es ferner, wenn mehrere, vorzugsweise zwei relativ zu dem Zylinder bewegliche Verriegelungskörper als separat bewegliche Verriegelungsbolzen gestaltet sind. Dadurch kann ein Verklemmen oder Verkanten bei der Verriegelung vermieden werden. Derartige Verriegelungsbolzen sind einfach und kostengünstig herstellbar und beanspruchen nur einen minimalen Einbau- und Schaltraum, so dass der gewonnene Platz vorteilhaft für andere Elemente und/oder Aufgaben genutzt werden kann oder ein insgesamt kleinerer und leichterer Verriegelungszylinder bereitgestellt werden kann. Es werden außerdem nur vergleichsweise kleine Ver- und Entriegelungskräfte benötigt. Dadurch kann der Verriegelungszylinder im Bereich der Verriegelungseinheit insgesamt Platz sparender bzw. leichter ausgeführt werden. Auch lassen sich durch die vorgenannten Maßnahmen deutlich reduzierte Ver- bzw. Entriegelungszeiten erreichen. Schließlich werden bei einem Einsatz von separat beweglichen Verriegelungsbolzen keine umlaufenden Dichtungen zwischen diesen und der Zylinderwand benötigt. Auf diese Weise kann also ein Verriegelungszylinder bereitgestellt werden, der bei einfacher und Platz sparender Verriegelungskonstruktion eine hohe Betriebssicherheit ermöglicht und einen guten Wirkungsgrad aufweist.

Ferner kann in besonders bevorzugter Weiterbildung vorgesehen sein, dass mehrere, vorzugsweise zwei, relativ zu dem Zylinder bewegliche Verriegelungskörper separat und unabhängig voneinander beweglich sind.

Es versteht sich, dass der Kolben auch drehfest mit einer ein Außengewinde aufweisenden Kolbenstange verbunden sein kann und relativ zu dem Zylinder drehfest, jedoch in dessen Axialrichtung bewegbar angeordnet sein kann, und dass die Spindel als Hohlspindel, insbesondere als Mutter, mit einem Innengewinde gestaltet sein kann, die auf dem Außengewinde der Kolbenstange des Kobens drehbar gelagert sein kann.

Weitere Merkmale, Vorteile und Gesichtspunkte der Erfindung sind dem nachfolgenden Beschreibungsteil entnehmbar, in dem ein bevorzugtes Ausführungsbeispiel der Erfindung beschrieben ist.

Es zeigen:
- Fig. 1: einen Längs-Querschnitt durch einen erfindungsgemäßen Verriegelungszylinder;
- Fig. 2a: einen vergrößerten Ausschnitt des Querschnitts gemäß Figur 1 im Bereich des dort rechts dargestellten Verriegelungsbolzens, wobei im Wesentlichen die im Zusammenhang mit dem erfindungsgemäßen Fluid-Gleitlager eingesetzten Bauteile mit Bezugszeichen versehen sind;
- Fig. 2b: den Ausschnitt gemäß Figur 2a, wobei nunmehr im Wesentlichen die im Zusammenhang mit der Verriegelungseinheit des erfindungsgemäßen Verriegelungszylinders eingesetzten Bauteile mit Bezugszeichen versehen sind;
- Fig. 3: eine Teil-Ansicht auf den drehfest mit der Spindel verbundenen und lochscheibenförmig ausgestalteten Ansatz, insbesondere zur Verdeutlichung der Zahl, Anordnung und Ausgestaltung der Verriegelungsausnehmungen;
- Fig. 4: einen Querschnitt in einer Abwicklung entlang der Schnittlinie A-B in Figur 3 zur Verdeutlichung der Querschnittsgeometrie der Verriegelungsausnehmungen;
- Fig. 5: einen hydraulischen Schaltplan gemäß einer vorteilhaften Ausführungsvariante der Erfindung;

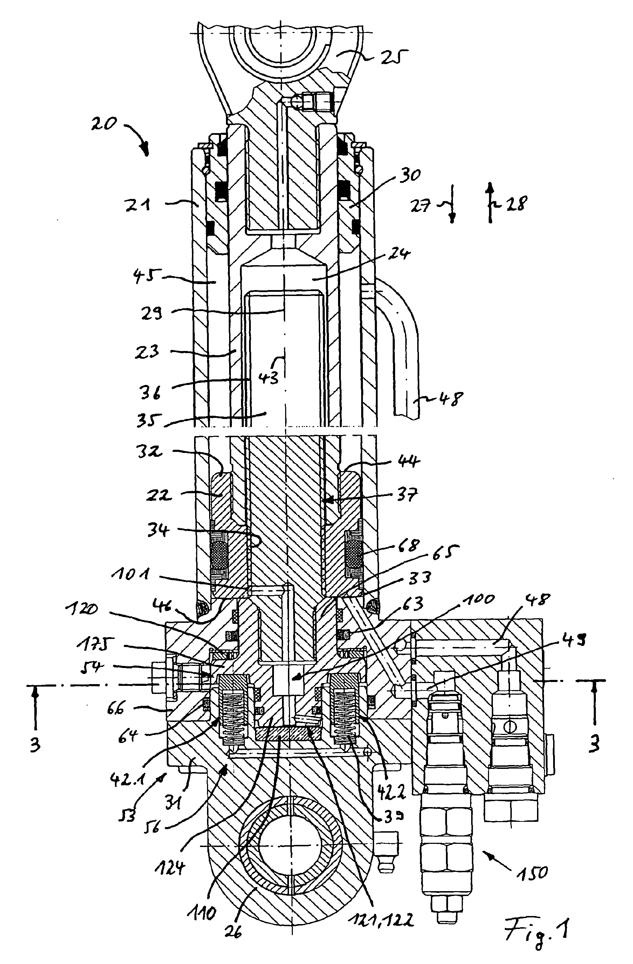

Der in Figur 1 gezeigte Verriegelungszylinder 20 umfasst einen Zylinder 21 und einen darin in Axialrichtung verschieblich gelagerten Kolben 22. Der Kolben 22 ist gegenüber der Zylinderinnenwand durch eine Ringdichtung 68 abgedichtet und ist auf seinen in Richtung der Längsachse 29 des Zylinders 21 voneinander weg weisenden Seiten 44, 46 durch ein fluides, insbesondere hydraulisches, Druckmittel, vorzugsweise Öl, beaufschlagbar, um eine druckmittelunterstützte Bewegung des Kolbens 22 in einer auch als zweite Richtung oder Entriegelungsrichtung bezeichneten Einfahrrichtung 27 oder in einer auch als erste Richtung bezeichneten Ausfahrrichtung 28 zu ermöglichen. Das Druckmittel ist über die Arbeitskanäle 48 und 49 auf beiden Seiten 44 und 46 des Kolbens 22 in eine erste Arbeitskammer 45 und in eine zweite Arbeitskammer 33 zuführbar, um eine Bewegung des Kolbens 22 längs des Zylinders 21 in Einfahrrichtung 27 oder in Ausfahrrichtung 28 erreichen zu können. Dabei ist die erste Arbeitskammer 45 gegenüber der zweiten Arbeitskammer 33 über die Ringdichtung 68 des Kolbens 22 abgedichtet. Der Kolben 22 bildet einen Ansatz 32, der drehfest mit der Kolbenstange 23 verbunden ist. Die Kolbenstange 23 erstreckt sich ausgehend von seiner Stirnseite 44 koaxial zu der Längsachse 29 des Zylinders 21. Der Kolben 22 ist als ein rohrförmiger Hohlkörper gestaltet und weist ein auch als Kolbengewinde bezeichnetes Innengewinde 34 auf. Dieses steht im Eingriff mit einem auch als Spindelgewinde bezeichneten Außengewinde 36 einer Spindel 35, auf welcher der Kolben 22 geführt ist. Das Innengewinde 34 des Kolbens 22 und das Außengewinde 36 der Spindel 35 sind vorzugsweise als achtgängige Trapez-Steilgewinde gestaltet, die zusammen ein nicht selbsthemmendes Gewinde 37 ausbilden, das hier rechtsgängig gestaltet ist. Der Zylinder 20 ist an seiner dem freien Ende 67 der Spindel 35 zugeordneten Seite durch einen die Kolbenstange 23 aufnehmenden Deckel 30 abgeschlossen. Auf seiner anderen Seite ist der Zylinder 21 fest mit einem stufenförmigen Ansatz 66 verbunden. Dieser ist wiederum durch einen den Zylinderboden 53 bildenden, flanschförmigen Deckel bzw. Kopf 31 abgeschlossen. Zur Befestigung des Verriegelungszylinders 20 weist die Kolbenstange 23 an ihrem aus dem Zylinder 21 heraus ragenden freien Ende ein hier mit einer Öse gestaltetes Befestigungselement 25 auf. Ein entsprechend gestaltetes Befestigungselement 26 ist gegenüberliegend an dem Kopf 31 des Zylinders 21 befestigt.

Im Bereich des von dem freien Ende 67 der Spindel 35 weg weisenden Endes 77 der Spindel 35 ist diese mit einem flanschförmigen Ansatz 65 verbunden, der an der Spindel 35 drehfest befestigt ist. Der Ansatz 65 weist im Bereich seines zylinderbodenseitigen Endes einen sich quer bzw. rechtwinklig zu der Drehachse 43 der Spindel 35 erstreckenden, hier ringförmigen Wandteil 79 auf, der als Lochscheibenteil 141 gestaltet ist. Der Lochscheibenteil 141 ist auf der zu dem freien Ende 67 der Spindel 35 hinweisenden Seite durch ein erstes Axiallager 120, hier in Form eines Ringlagers 127, das als Nadellager 138 ausgebildet ist, an einer Stütz- und Anlagestufe des Ansatzes 66 gelagert. Dieses als Wälzlager 137 gestaltete Axiallage 120 dient dazu, die in der Ausfahrrichtung 28 auf die Spindel 35 wirkenden Axialkräfte aufzunehmen.

Um auch die in der Einfahrrichtung 27 entgegengesetzt zu der Ausfahrrichtung 28 auf die Spindel 35 wirkenden Axialkräfte aufnehmen zu können, ist ein zweites Axiallager 121 vorgesehen. Dieses ist erfindungsgemäß als ein Fluid-Gleitlager 122 gestaltet, das hier als hydrostatisches Gleitlager 122 ausgebildet ist. Das Fluid-Gleitlager 122 ist mit einer Stütz- und Lagerfläche 129 eines Stütz- und Lagerkörpers 124 und mit einer dieser gegenüber liegenden Gegen-Stütz- und Lagerfläche 131 einer Gleitlagerscheibe 110 ausgebildet. Diese ist in einer Ausnehmung 130 eines Lagerflansches 95 des Kopfes 31 des Zylinders 21 aufgenommen und stützt sich dort ab. Der Stütz- und Lagerkörper 124 bildet einen Teil des flanschförmigen, mit Verriegelungsausnehmungen 38; 38.1 bis 38.6 versehenen und als Lochscheibenteil 141 gestalteten Ansatzes 65 bzw. ist mit diesem einteilig verbunden. Es versteht sich jedoch, dass der Stütz- und Lagerkörper auch mehrteilig mit einem Ansatz verbunden sein kann.

Der Ansatz 65 weist ein Innengewinde auf, das mit einem Außengewinde eines Schafts der Spindel 35 drehfest verschraubt ist. Gegebenenfalls kann das Innengewinde des Ansatzes 65 mit dem Außengewinde des Spindelschafts verklebt sein. Der Stütz- und Lagerkörper 124 ist mehrteilig mit der Spindel 35 verbunden bzw. an dieser befestigt. Es versteht sich jedoch, dass der Stütz- und Lagerkörper auch einteilig mit der Spindel verbunden sein kann. Der drehfest an der Spindel 35 befestigte Stütz- und Lagerkörper 124 ist koaxial und im Wesentlichen rotationssymmetrisch zu der Drehachse 43 der Spindel 35 gestaltet. Er ist hier als ein Zylinderbolzen 125 gestaltet, der als Hohlkörper ausgebildet ist. Der Stütz- und Lagerkörper 124 erstreckt sich ausgehend von dem Lochscheibenteil 141 in Richtung 27 des Zylinderbodens bzw. Kopfes 31 des Zylinders 21. Die Stütz-und Lagerfläche 129 des Stütz- und Lagerkörpers 124 ist hier planeben und senkrecht zu der Drehachse 43 der Spindel 35 ausgebildet. Die Gegen-Stütz- und -Lagerfläche 131 der Gleitlagerscheibe 110 ist hier ebenfalls planeben und senkrecht zu der Drehachse 43 der Spindel 35 ausgebildet.

Um eine Ausbildung und/oder ausreichende Schmierung des Fluid-Gleitlagers 122, ggf. in Verbindung mit einem zumindest zeitweise Abheben der Stütz- und Lagerfläche 129 des Stütz- und Lagerkörpers 124 und folglich auch der relativ zu dem Zylinder 21 in Axialrichtung bzw. parallel zu ihrer Drehachse 43 zumindest geringfügig bewegbaren Spindel 35 unterstützen bzw. erreichen bzw. bewirken zu können, ist erfindungsgemäß ein Zuleitungskanal 100 vorgesehen, der mit einem bzw. mit dem Druckmittel beaufschlagbar ist bzw. beaufschlagt wird. In dem in den Figuren gezeigten bevorzugten Ausführungsbeispiel ist der Zuleitungskanal 100 in dem Stütz- und Lagerkörper 124 und in dem Schaft der Spindel 35 angeordnet. Dabei ist ein erster Zuleitungskanalteil 100.1 in dem Schaft der Spindel 35 und ein zweiter Zuleitungskanalteil 100.2 in dem Stütz- und Lagerkörper 124 angeordnet. Der erste Zuleitungskanalteil 100.1 ist mit einem Axialkanalteil 104.1 eines konzentrisch und rotationssymmetrisch zu der Drehachse 43 der Spindel 35 ausgebildeten Axialkanals 104 ausgebildet. Der zweite Zuleitungskanalteil 100.2 ist mit einem weiteren Axialkanalteil 104.2 des Axialkanals 104 gebildet. Folglich fällt die Achse des ersten Axialkanalteils 104.1 mit der Achse des zweiten Axialkanalteils 104.2 zusammen. Der erste Axialkanalteil 104.1 des ersten Zuleitungskanalteils 100.1 des Zuleitungskanals 100 mündet in einen dazu quer, hier senkrecht, ausgebildeten Quer- bzw. Radialkanal 106, der wiederum in eine erste, zu der ersten Arbeitkammer hin offene Zuleitungskanalöffnung und über diese in die erste Arbeitskammer 33 mündet. Der zweite Zuleitungskanalteil 100.2 des Zuleitungskanals 100 mündet im Beeich der Stütz- und Lagerfläche 129 des Stütz- und Lagerkörpers 124, in eine zweite, zu der Gleitlagerscheibe 110 hin offene Zuleitungskanalöffnung 102 und über diese in einen Fluid-Gleitlagerraum 123 des Fluid-Gleitlagers 122. Die zweite Zuleitungskanalöffnung 102 weist einen Öffnungsrand 103 auf, der vollumfänglich von der Stütz- und Lagerfläche 129 des Stütz- und Lagerkörpers 124 begrenzt bzw. umgeben ist.

Der in dem Stütz- und Lagerkörper 124 angeordnete zweite Zuleitungskanalteil 100.2 des Zuleitungskanals 100 ist mit einem sich zu diesem quer, hier in einem Winkel 115 zu der Drehachse 43 und in Richtung radial nach außen von dem zweiten Zuleitungskanalteil 100.2 weg erstreckenden Abzweigkanal 107 fluidverbunden. Der Abzweigkanal 107 mündet einerends in den zweiten Zuleitungskanalteil 100.2 und mündet andernends in einen Fluid-Aufnahmeraum 113. Dieser Fluid-Aufnahmeraum 113 ist im Außenrandbereich 108 der Stütz- und Lagerfläche 129 und in einem sich daran in der ersten Richtung 28 anschließenden Randbereich 109 des Stütz- und Lagerkörpers 124 an dessen kreiszylindrischen Außenumfang 126 ausgebildet. Der Fluid-Aufnahmeraum 113 ist hier durch einen stufenförmigen Ring-Absatz begrenzt, der am Lagerende des Stütz- und Lagerkörpers 124 um die Drehachse 43 umlaufend ausgebildet ist. Auf diese Weise kann das Druckmittel aus der Arbeitskammer 33 nicht nur zentral auf die Gleitlagerscheibe 110 gelangen sondern auch in die Randbereiche 108 und 109. Dadurch wird eine Ausbildung und Schmierung des Fluid-Gleitlagers 122 über eine lange Zeit sichergestellt. Außerdem wird dadurch sichergestellt, dass auch eine erfindungsgemäße Dichtung 105 stets mit Druckmittel benetzt ist bzw. wird, mittels welcher das Fluid-Gleitlager 122 gegenüber dem Lager 62 für die relativ zu dem Zylinder 21 bewegbaren Verriegelungskörper 42; 42.1, 42.2 und auch gegenüber dem mit fluidem Arbeits- bzw. Druckmittel beaufschlagbaren Entriegelungsdruckraum 85 bzw. gegenüber den Verriegelungsausnehmungen 38; 38.1 bis 38.6 abgedichtet ist. Diese als Ringdichtung gestaltete Dichtung 105 ist in einer nach außen offenen, in dem Stütz- und Lagerkörper 124 ausgebildeten und um dessen Umfang 126 umlaufenden Ringnut 111 aufgenommen und stützt sich dort ab. Die Dichtung 105 ist derart dimensioniert, dass sie an der der Außenfläche 112 des kreiszylindrischen Stütz- und Lagerkörpers 124 gegenüber liegenden Innenfläche der kreiszylindrischen Ausnehmung 130 des sich axial in die erste Richtung 28 erstreckenden Lagerflansches 90 des Kopfes 31 des Zylinders 21 abdichtend anliegt.

Bei dem in den Figuren gezeigten bevorzugten Ausführungsbeispiel der Erfindung ist vorgesehen, dass das Fluid-Gleitlager 122 bei einer Bewegung des Kolbens 22 in der ersten Richtung 28 und bei einer Bewegung des Kolbens 22 in der zweiten Richtung 27 sowie bei bzw. während eines Anhaltens des Kolbens 22 und auch in wenigstens einer, vorzugsweise in jeder, Haltestellung des Kolbens 22 zwischen seinen beiden Maximalstellungen mit dem Druckmittel beaufschlagt ist bzw. wird und vorzugsweise dabei die Stütz- und Lagerfläche 129 bei einer Bewegung des Kolbens 22 in der ersten Richtung 28 und bei einer Bewegung des Kolbens 22 in der zweiten Richtung 27 sowie bei bzw. während eines Anhaltens des Kolbens 22 und auch in wenigstens einer, vorzugsweise in jeder, Haltestellung des Kolbens 22 zwischen seinen beiden Maximalstellungen zumindest zeitweise, vorzugsweise überwiegend, gegebenenfalls auch ständig, von der Gegen-Stütz- und -Lagerfläche 131 abgehoben ist bzw. wird. Ferner ist vorgesehen, dass die Stütz- und Lagerfläche 129 mit Hilfe des Druckmittels von der Gegen-Stütz- und -Lagerfläche 131 des Fluid-Gleitlagers 122 abgehoben ist bzw. wird.

Die Spindel 35 ist außer über die beiden Axiallager 120, 121 auch über zwei Radiallager 116, 117 gelagert, um etwaig auftretenden Kippkräften entgegen wirken zu können. Die Radiallager sind hier mit Führungskörpern 116 und 117 ausgebildet, die hier jeweils als Flachband gestaltet sind, das beispielsweise aus Hartfasermaterial bestehen kann. Ein erster Führungskörper 116 ist in einer nach innen offenen Ringnut 118 des mit dem Zylinder fest verbundenen Ansatzes 66 aufgenommen und stützt sich dort ab. Diese Ringnut 118 wird von einer einen kreiszylindrischen Querschnitt aufweisenden Innenfläche 134 des Ansatzes 66 begrenzt. Ein zweiter Führungskörper 117 ist in Richtung 27 zu dem ersten Führungskörper 116 beabstandet in einer nach außen offenen Ringnut 119 des Stütz- und Lagerkörpers 124 aufgenommen und stützt sich dort ab. Diese Ringnut 119 wird von einer einen kreiszylindrischen Querschnitt aufweisenden Außenfläche 112 des Stütz- und Lagerkörpers 124 begrenzt. Die den zweiten Führungskörper 117 aufnehmende Ringnut 119 ist in Richtung 28 zu der die Dichtung 105 aufnehmenden Ringnut 111 beabstandet zu dieser angeordnet, so dass auch die Ringnut 119 mit dem zweiten Führungskörper 117 gegenüber dem Fluid-Gleitlager 122 über die Dichtung 105 abgedichtet ist.

Die Außenfläche 112 des Stütz- und Lagerkörpers 124 weist von der Innenfläche 134 des Ansatzes 66 einen Abstand 136 auf. Das Maß dieses Abstandes 136 bestimmt die Breite und damit Größe einer gedachten, senkrecht zu der Drehachse 43 ausgebildeten Ringfläche. Bei einer Beaufschlagung des Schaltkanals 47 mit einem Druckmittel werden auch der Durchströmspalt 71 und der Spalt 91 und mithin auch der Entriegelungsdruckraum 85 mit Druckmittel beaufschlagt, so dass die Ringfläche zwischen der Außenfläche 112 des Stütz-und Lagerkörpers 124 und derjenigen Außenfläche, auf der sich die in der nach innen offenen Ringnut 135 des Ansatzes 66 aufgenommene Dichtung 64 abstützt, mit einem in die Richtung 28 wirkenden Druck beaufschlagt wird, der das Fluid-Gleitlager 122 von Druck entlastet. Zugleich wird jedoch auch der das Nadellager 138 aufnehmende Raum mit Druckmittel beaufschlagt, so dass die das Nadellager 136 in die Richtung 27 abstützende Ringfläche mit einem Druck beaufschlagt wird, der dem zuvor bezeichneten Druck entgegen wirkt und der das Fluid-Gleitlager 122 belastet. Die Differenz der Flächen dieser beiden Ringflächen ergibt die Fläche der die Breite 136 aufweisenden Ringfläche, so dass im Ergebnis das Fluid-Gleitlager in einer der Größe der gedachten Ringfläche entsprechenden Maß entlastet wird.

Der flanschförmige Ansatz 65 ist an dem sich quer zur Drehachse 43 der Spindel 35 erstreckenden Wandteil 79 bzw. Lochscheibenteil 141 mit hier insgesamt sechs Verriegelungsausnehmungen 38.1 bis 38.6 versehen. Die Verriegelungsausnehmungen 38.1 bis 38.6 sind in jeweils gleichen Winkelabständen zueinander auf einem gedachten Umfangskreis 73 derart angeordnet, dass jeweils zwei Verriegelungsausnehmungen 38 diametral zueinander angeordnet sind.

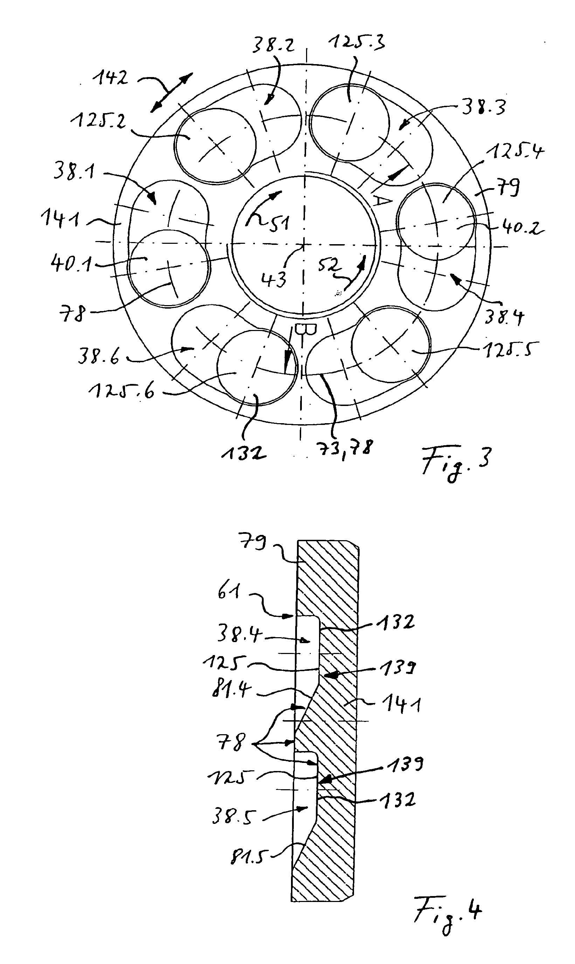

Die genaue Gestaltung und Anordnung der Verriegelungsausnehmungen 38.1 bis 38.6 ist insbesondere in den Figuren 3 und 4 gezeigt. Die Verriegelungsausnehmungen 38; 38.1 bis 38.6 sind an dem von dem freien Ende 67 der Spindel 35 weg weisenden Ende des an der Spindel drehfest befestigten und mit dem Lochscheibenteil 141 gestalteten Ansatzes 65 vorgesehen. Jede Verriegelungsausnehmung 38.1 bis 38.6 weist in der in Figur 4 gezeigten Schnittebene einen trapezförmigen Querschnitt 139 auf. Dabei ist jede Verriegelungsausnehmung 38; 38.1 bis 38.6 in Einfahrrichtung 27 zum Zylinderboden 53 hin axial nach außen offen gestaltet und ist seitlich begrenzt durch einen mit einer Kreisfläche 125 gebildeten Ausnehmungsgrund 132, der hier eben und normal zu der Drehachse 43 der Spindel 35 angeordnet ist.

Ausgehend von diesem, mit einer Kreisfläche 125 gebildeten Ausnehmungsgrund 132 wird jede Verriegelungsausnehmung 38 einerseits durch eine etwa senkrecht zu der Kreisfläche 125 axial nach außen verlaufende Wandung unter Ausbildung einer Stufe 61 begrenzt und andererseits geht der Ausnehmungsgrund 132 in eine als schiefe Ebene bzw. Rampe gebildete Auslaufschräge 81 über. Dadurch nimmt die Tiefe der Verriegelungsausnehmungen 38 ausgehend von ihrem Ausnehmungsgrund 132 dort kontinuierlich bis auf Null ab. Durch diese Form und Anordnung der in Umfangsrichtung in gleichen Winkelabständen zueinander angeordneten Verriegelungsausnehmungen 38; 38.1 bis 38.6 ist eine stufen- bzw. zahnförmige Steuerkante 78 ausgebildet, die in der Ansicht gemäß Figur 3 durch einen strichpunktierten Kreis gekennzeichnet ist, der konzentrisch zu der Drehachse 43 der Spindel 35 angeordnet ist. Ein Teil der Steuerkante 78 ist in dem Querschnitt gemäß Figur 4 gut erkennbar.

Jede Verriegelungsausnehmung 38; 38.1 bis 38.6 ist mit sich konisch nach innen verjüngenden Wandteilen 70 gestaltet und dient zur Aufnahme von sich nach außen konisch verjüngenden Wandteilen 72 der relativ zu dem Zylinder 21 in Axialrichtung 27 bzw. 28 beweglichen Verriegelungsbolzen 40; 40.1, 40.2. Dabei ist das die konisch verjüngenden Wandteile 72 aufweisende freie Ende 57 der jeweiligen Verriegelungsbolzen 40 vorzugsweise derart auf die Verriegelungsausnehmungen 38 im Bereich ihrer sich konisch verjüngenden Wandteile 70 abgestimmt gestaltet, dass ein Durchströmspalt 71 für das Druckmittel ausgebildet ist. Dieser Durchströmspalt 71 steht in Fluidverbindung mit einem Spalt 91, der im Bereich der radialen Ränder sowohl des flanschförmigen Ansatzes 65 als auch des diesem gegenüber liegenden Teils des Kopfes 31 des Zylinders 21 angeordnet ist. Dieser Spalt 91 steht in Fluidverbindung mit einem Schaltkanal 47, der wiederum in Fluidverbindung mit den Arbeitskanälen 48 und 49 bringbar ist, über die der Kolben 22 auf seinen jeweiligen Seiten 44 und 46 mit Druckmittel beaufschlagbar ist.

Die Verriegelungsbolzen 40 sind im Bereich ihrer freien Enden 57 querschnittlich geschlossen gestaltet. Jeder Verriegelungsbolzen 40 ist als ein vorzugsweise langgestreckter Zylinderbolzen 69 rotationssymmetrisch zu seiner Längsachse 74 gestaltet. Jeder Verriegelungsbolzen 40 weist eine kreiszylindrische Außenkontur 50 und eine kreiszylindrische Innenkontur auf, ist also als ein Rotations-Hohlkörper gestaltet. Jeder Verriegelungsbolzen 40 weist außerdem eine kreiszylindrische Ausnehmung 92 auf, die mit parallel zu der Längsachse 74 des jeweiligen Verriegelungsbolzens 40 begrenzenden Wandteilen gestaltet ist und die zu dem dem Kopf 31 des Zylinders 21 gegenüber liegenden Ende des Verriegelungsbolzens 40 nach außen offen ist. Diese Ausnehmung 92 dient zur Aufnahme und seitlichen Abstützung einer als Druckfeder gestalteten Feder 39. Diese ist im montierten Zustand mit einem Federabschnitt 93 in der Ausnehmung 92 aufgenommen. Dabei stützt sich die Feder 39 mit einem ihrer Enden 95 an einer Innenfläche 94 einer sich radial nach innen erstreckenden Stütz- und Anlagefläche 60 des Verriegelungsbolzens 40 ab. Das andere Ende 96 der Feder 39 stützt sich an einer Innenfläche einer entsprechenden Stütz- und Anlagestufe 76 des Kopfes 31 des Zylinders 21 ab.

In einem axialen Abstand von der Innenfläche der Stütz- und Anlagestufe 76 und in Ausfahrrichtung 28 versetzt, ist eine sich radial nach außen erstreckende Anschlag- und Gegendichtfläche 98 für den Verriegelungsbolzen 40 vorgesehen, die senkrecht zu den eine Lagerausnehmung 75 begrenzenden Wandteilen angeordnet ist. Jeder Verriegelungsbolzen 40 weist an seinem kopf- bzw. federseitigen Ende 59 eine Stirnkante 99 auf, die mit einer umlaufenden Ring-Dichtfläche 97 gestaltet ist und die in Entriegelungsrichtung 27 des jeweiligen Verriegelungsbolzens 40 weist. Die Ring-Dichtfläche 97 liegt abdichtend an der ebenfalls umlaufend gestalteten Anschlag- und Gegendichtfläche 98 des Kopfes 31 des Zylinders 21 an, wenn der jeweilige Verriegelungsbolzen 40 nach einer Beaufschlagung mit den durch das Arbeits- bzw. Druckmittel in Entriegelungsrichtung 27 ausgeübten Druckkräften in seine Entriegelungsstellung überführt worden ist. Unter den dann wirksamen Druckkräften wird zwischen der Ring-Dichtfläche 97 und der Anschlag- und Gegendichtfläche 98 eine Abdichtung erreicht, so dass keine Leckage von Arbeits- bzw. Druckmittel entlang den Außenflächen des jeweiligen Verriegelungsbolzens 40 auftritt. Außerdem begrenzt die Anschlag- und Gegendichtfläche 96 vorteilhaft den jeweiligen Entriegelungshub der Verriegelungsbolzen 40.

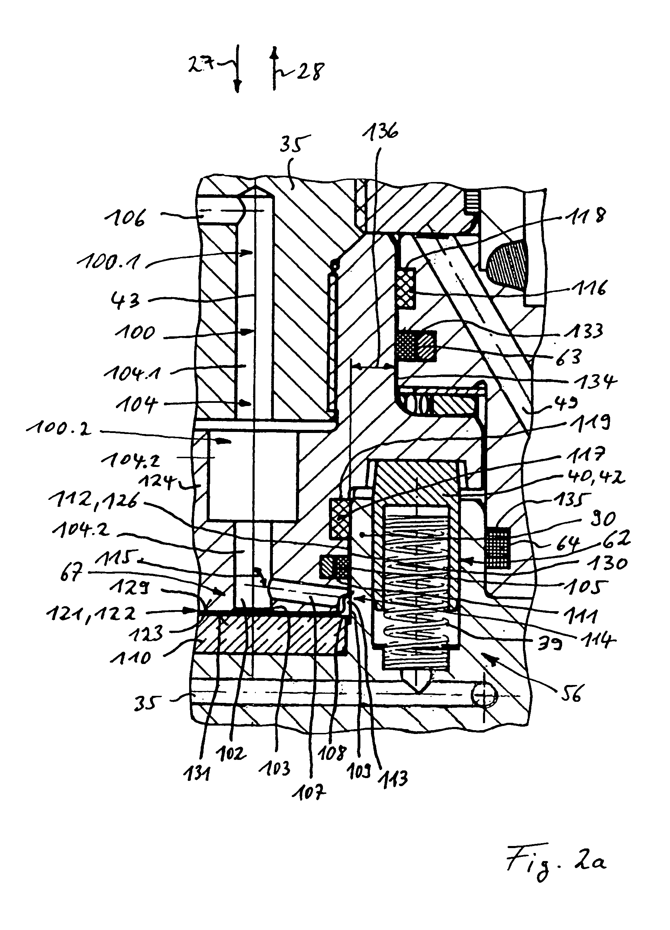

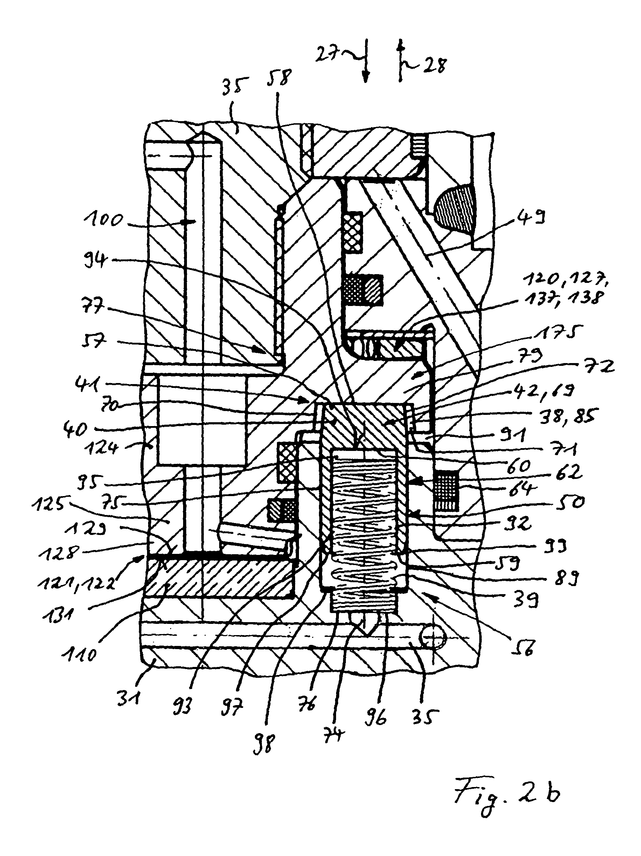

Jeder Verriegelungsbolzen 40 ist mit geringem Spiel in der eine zylindrische Innenkontur 98 aufweisenden Bohrung bzw. Lagerausnehmung 75 eines Lagers 62 parallel zu der Drehachse 43 der Spindel 35 verschieblich gelagert, kann also ausgehend von der in den Figuren 1 und 2 gezeigten Verriegelungsstellung 41 mithilfe des Druckmittels entgegen den Federkräften der Feder 39 in der Einfahr- bzw. Entriegelungsrichtung 27 in seine Entriegelungsstellung verschoben werden, bzw. kann umgekehrt nach Druckentlastung im Bereich seines freien Verriegelungsendes 57 von seiner Entriegelungsstellung automatisch, d. h. durch die von der jeweiligen Feder 39 auf den jeweiligen Verriegelungsbolzen 40 ausgeübten Rückstell-Federkräfte, wieder in seine Verriegelungsstellung 41 überführt werden. Die Lagerausnehmung 75 weist also einen Innendurchmesser auf, der geringfügig größer ist als der Außendurchmesser des Verriegelungsbolzens 40.

Jeder Verriegelungsbolzen 40 weist an seinem freien Ende 57 eine senkrecht zu seiner Längsachse 74 angeordnete Wirkfläche 58 auf, an der das fluide Arbeits- bzw. Druckmittel angreifen kann, um den Verriegelungsbolzen 40 ausgehend von der in Figur 2 gezeigten Verriegelungsstellung 41 in eine Entriegelungsstellung zu überführen, in welche er außer Eingriff mit den Verriegelungsausnehmungen 38; 38.1 bis 38.6 steht, also eine Drehung der Spindel 35 in ihre erste Drehrichtung 51 nicht mehr blockiert. Bei einer Bewegung der Verriegelungsbolzen 40 von ihrer Entriegelungsstellung in ihre Verriegelungsstellung 41 wird das sich in den zugeordneten Verriegelungsausnehmungen 38 befindliche Arbeits- bzw. Druckmittel über den Schaltkanal 47 in den Rücklaufkanal 87 verdrängt.

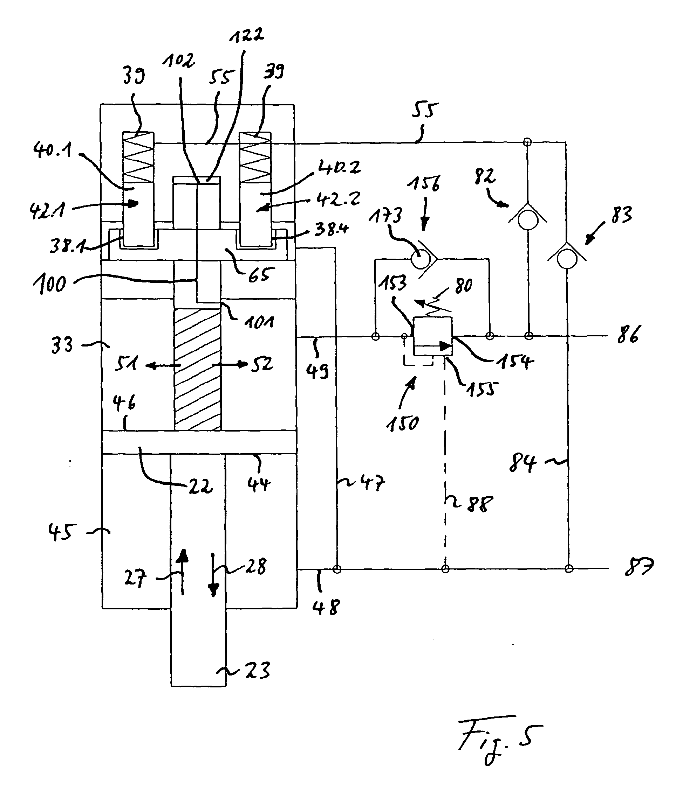

In Figur 5 ist ein hydraulischer Schaltplan für den Verriegelungszylinder 20 gemäß dem bevorzugten Ausführungsbeispiel gezeigt. In diesem Schaltplan sind mehrere besonders vorteilhafte Steuerungsmittel und -wege schematisch veranschaulicht.

Als eines dieser Steuerungsmittel ist ein als Lasthalte-Senkbrems-Mittel 150 bezeichnetes Lasthalte-Senkbrems-Ventil vorgesehen. Mit Hilfe dieses Lasthalte-Senkbrems-Mittel 150 kann erreicht bzw. bewirkt werden, dass bei Beaufschlagung des Kolbens 22 auf seiner zweiten Seite 44 mit dem in der zweiten Arbeitskammer 45 befindlichen Druckmittel unter Ausbildung eines Arbeitsdruckes, der eine Verschiebung des Kolbens 22 in die Einfahrrichtung 27 bewirkt, gleichzeitig in der ersten Arbeitskammer 33 an der ersten Seite 46 des Kolbens 22 ein durch das in der ersten Arbeitskammer 33 befindliche Druckmittel ausgeübter Gegendruck wirkt. Dieser Gegendruck in der ersten Arbeitskammer 33 ist kleiner als der Arbeitsdruck in der zweiten Arbeitskammer 45, so dass ein unkontrolliertes Voreilen des Kolbens 22 in die Einfahrrichtung 27 vermieden wird.

Bei einer gewollten Druckentlastung am Rücklaufkanal 87 zum Zwecke eines Haltens des Kolbens 22 in einer gewünschten Hubstellung, sperrt das Lasthalte-Senkbrems-Mittel 150 einen Rückfluss des Druckmittels aus der Arbeitskammer 33, so dass der Kolben 22 durch das in der Arbeitskammer 33 befindliche Druckmittel in der gewünschten Hubstellung sicher gehalten ist.

Das Lasthalte-Senkbrems-Ventil 150 weist einen Einlass 153, einen Auslass 154 und einen Steueranschluss 155 für das Druckmittel auf, wobei der Einlass 153 mit der ersten Arbeitskammer 33 über den Kanal 49 fluidverbunden ist. Der Steueranschluss 155 des Lasthalte-Senkbrems-Ventils 150 ist mit dem Rücklaufkanal 87 fluidverbunden. Mit dem Einlass 153 und dem Auslass 154 des Lasthalte-Senkbrems-Ventils 150 ist ein ein Sperrglied 173 aufweisendes Rückströmsperrmittel 156 fluidverbunden, das eine Strömung des Druckmittels von dem Auslass 154 zu dem Einlass 153 zulässt, aber in entgegengesetzter Richtung sperrt.

Von dem mit dem Auslass 154 des Lasthalte-Senkbrems-Ventils 150 verbundenen Vorlaufkanal 86 zweigt ein in den Kanal 55 mündender Kanal ab, in dem ein in diese Richtung sperrendes Rückschlagventil 82 angeordnet ist. Von dem mit dem Schaltkanal 47, dem Arbeitskanal 48 und dem Schaltkanal 88 fluidverbundenen Rücklaufkanal 87 zweigt ein ebenfalls in den Kanal 55 mündender Kanal 84 ab, in dem ebenfalls ein in diese Richtung sperrendes Rückschlagventil 83 angeordnet ist.

Der in den Figuren gezeigte Verriegelungszylinder 20 ist auf eine Verriegelung unter Druck ausgelegt. Dies bedeutet, dass der Verriegelungszylinder 20 zum Bewegen bzw. Anheben einer nicht näher in den Figuren gezeigten Last in Ausfahrrichtung 28 und ggf. zu einem Wiederabsenken der Last in Einfahrrichtung 27 eingesetzt wird. Durch die zu bewegende Last wirken auf die Kolbenstange 23 entgegen der Ausfahrrichtung 28 wirkende Druckkräfte. Soll die Kolbenstange 23 in irgendeiner beliebigen Hub- bzw. Ausfahrstellung unter Last gehalten werden, ist die Kolbenstange 23 mit ihrem Kolben 22 in der gewünschten Hub- bzw. Ausfahrstellung durch das Lasthalte-Senkbrems-Ventil 150 in einer stabilen Position bzw. Lage relativ zu dem Zylinder 21 hydraulisch gesichert gehalten.

Zusätzlich zu der hydraulischen Sicherung mithilfe des Lasthalte-Senkbrems-Ventils 150 ist eine mechanische Sicherung des Verriegelungszylinders 20 mittels der die Verriegelungseinheit 56 möglich. Diese zusätzliche mechanische Sicherung greift insbesondere dann, wenn eine Leckage oder ein Versagen oder ein ähnlicher Schaden an dem hydraulischen System auftritt. Denn dann greifen jeder Verriegelungsbolzen 40.1, 40.2 jeweils in eine der Verriegelungsausnehmung 38 ein. Bei der besagten Beanspruchung auf Druck in Richtung der Einfahrrichtung 27 bedeutet dies, dass bedingt durch die Zwangskopplung zwischen dem Kolben 22 und der Spindel 35 über das nicht selbsthemmende, hier rechtsgängige Gewinde 37, die Spindel 35 zu einer Rechtsdrehung in Drehrichtung 51 veranlasst wird. Sollten also die Verriegelungsbolzen 40.1, 40.2 in der aktuellen Hub- bzw. Ausfahrstellung bedingt durch die Federkraft der Feder 39 noch nicht in jeweils eine der Verriegelungsausnehmungen 38; 38.1 bis 38.6 hineinragen und dort jeweils an den Stufen 61 anschlagen, wird bedingt durch die wirkenden Kräfte die Spindel 35 in Drehrichtung 51 noch geringfügig weiter gedreht, bis die Verriegelungsbolzen 40.1, 40.2 in jeweils einer der Verriegelungsausnehmungen 38; 38.1 bis 38.6 an den jeweiligen Stufen 61 anschlagen. Auf diese Weise wird also eine unidirektionale Arretierung bzw. Blockierung der Spindel 35 und damit des Kolbens 22 in der gegebenen Hub- bzw. Ausfahrstellung erreicht. Diese Eingriffs- bzw. Blockierstellung der Zylinderbolzen 40 wird insbesondere in dem Moment erreicht, in dem eine ungewollte, sich in dem Kanal 49 und damit auch in dem Schaltkanal 47 auswirkende Druckentlastung auftritt. Denn dann wird der jeweilige Verriegelungsbolzen 40 durch die mechanische Kraft der Druckfedern 39 gegen den sich drehenden flanschförmigen Ansatz 65 gedrückt, bis der jeweilige Verriegelungsbolzen 40 in der nächst möglichen Verriegelungsausnehmung 38 an deren Stufe 61 einrastet und dadurch die weitere Drehbewegung der Spindel, hier in die Drehrichtung 51 blockiert.

Bei einer Drehung der Spindel 35 in ihre zweite Drehrichtung 52 dreht sich der an dieser drehfest befestigte und die Verriegelungsausnehmungen 38; 38.1 bis 38.6 aufweisende Ansatz 65 in gleicher Drehrichtung 52 mit, so dass auch die Steuerkante 78 eine entsprechende Drehung erfährt. Die Steuerkante 78 wandert also in Drehrichtung 52 an den zylinderortsfesten, jedoch in Axialrichtung parallel zu der Spindeldrehachse 43 beweglichen Verriegelungsbolzen 40; 40.1, 40.2 entlang. Dadurch vollziehen die Verriegelungsbolzen 40; 40.1, 40.2 eine axiale Hin- und Herbewegung, während sie durch die Federkraft ihrer Federn 39 an der Steuerkante 78 angedrückt gehalten werden.

Im Unterschied dazu, d. h. wenn die Spindel 35 mit einer Kraft beaufschlagt wird, welche eine Drehung der Spindel 35 in ihre entgegengesetzte, erste Drehrichtung 51 induziert, kann sich der mit dem Lochscheibenteil 141 versehene Ansatz 65 und damit die Spindel 35 nur so lange in ihrer ersten Drehrichtung 51 drehen, bis die an dem jeweiligen freien Ende 57 des jeweiligen Verriegelungsbolzens 40 vorgesehenen, sich leicht konisch verjüngenden Wandteile 72 an den jeweiligen Stufen 61 der zugeordneten Verriegelungsausnehmungen 38 anschlagen, wodurch ein Verriegeln bzw. Blockieren der Spindel 35 in der besagten Drehrichtung 51 erreicht wird.

Durch die vorbeschriebenen konstruktiven Maßnahmen ist also ein Sperrklinkenmechanismus 54 verwirklicht, mittels dessen eine mechanische Blockierung der Spindel 35 in einer ersten Drehrichtung 51 um ihre Drehachse 43 erreichbar ist, während die Spindel 35 in ihrer entgegengesetzten zweiten Drehrichtung 52 um ihre Drehachse 43 im Wesentlichen frei bewegbar ist bzw. bleibt, insbesondere um eine Bewegung des Kolbens 22 längs des Zylinders 21, hier in Ausfahrrichtung 28, zu ermöglichen.

Es versteht sich, dass die Erfindung nicht nur bei auf Druck verriegelnden Verriegelungszylindern einsetzbar ist, sondern selbstverständlich auch bei auf Zug verriegelnden Verriegelungszylindern. Dann jedoch würde das Lasthalte-Senkbrems-Ventil 150 nicht dem Vorlaufkanal 86 zugeordnet sein, wie in Figur 5 gezeigt, sondern es würde dem Rücklaufkanal 87 zugeordnet sein. In einem derartigen Fall wäre also der Auslass 154 des Lasthalte-Senkbrems-Ventils 150 mit dem Rücklaufkanal 87 fluidverbunden und der Einlass 153 des Lasthalte-Senkbrems-Ventils 150 wäre mit dem in die zweite Arbeitskammer 45 mündenden Arbeitskanal 48 fluidverbunden. Schließlich würde dann noch der Schaltkanal 47 nicht in den in die zweite Arbeitskammer 45 mündenden Arbeitskanal 48 münden, sondern in den in die erste Arbeitskammer 33 mündenden Arbeitskanal 49. Die übrige Konstruktion könnte unverändert bleiben.

Nachfolgend wird die Arbeitsweise des Verriegelungszylinders 20 näher beschrieben:

Um beispielsweise eine Bewegung des Kolbens 22 und damit der Kolbenstange 23 relativ zu dem Zylinder 22 in der Ausfahrrichtung 28 zu erreichen, wird der hier mit Vorlaufkanal 86 bezeichnete Kanal mit Druckmittel beaufschlagt, d. h. es wird mithilfe einer in den Figuren nicht näher gezeigten Pumpe ein Druckmittel durch den Vorlaufkanal 86 zugeführt.

Das Druckmittel kann dann von dem Kanal 86 über das in diese Richtung durchgängige Rückströmsperrmittel 156 in den Kanal 49 fließen, der wiederum in die erste Arbeitskammer 33 einmündet. Dadurch wird der Kolben 22 auf seiner zweiten Seite 46 mit Druck beaufschlagt, so dass eine Kraft in Ausfahrrichtung 28 auf den Kolben 22 wirkt. Zugleich wird der Fluid-Gleitlagerraum 123 über den Zuleitungskanal 100 mit dem unter Druck stehenden Druckmittel beaufschlagt, so dass dadurch eine Schmierung bzw. Ausbildung des Fluid-Gleitlagers 122 bewirkt wird. Dies wird unterstützt bzw. ermöglicht durch ein zumindest zeitweises Abheben der Stütz- und Lagerfläche 129 des Stütz- und Lagerkörpers 124 von der Gegen-Stütz- und Lagerfläche 131. Bedingt durch die Zwangskopplung des Kolbens 22 mit der Spindel 35 über das nicht selbsthemmende, hier rechtsgängige Gewinde 37, wirkt gleichzeitig auf die Spindel 35 eine Kraft, die eine Drehung der Spindel nach links, d. h. in ihre zweite Drehrichtung 52 induziert. Diese Drehung der Spindel 35 in ihre zweite Drehrichtung 52 ist im Wesentlichen ungehindert möglich, weil bei einer Drehung in dieser Drehrichtung 52 die Verriegelungsbolzen 40.1, 40.2 entgegen den Federkräften der diesen zugeordneten Federn 39 aufgrund der Auslaufschrägen 81 der Verriegelungsausnehmungen 38.1 bis 38.6 jeweils aus diesen Verriegelungsausnehmungen 38 herausgedrückt werden können. Dies wird also insbesondere durch die spezielle Gestaltung des hier als Lochscheibenteil 141 ausgebildeten Ansatzes 65 mit der an den Verriegelungsbolzen 40.1 und 40.2 umlaufenden Steuerkante 78 ermöglicht. Im Zuge einer Bewegung des Kolbens 22 in die Ausfahrrichtung 28 vollziehen also die Verriegelungsbolzen 40; 40.1, 40.2 mehrfach eine Hin- und Herbewegung parallel zu der Längsachse 29 des Zylinders 21 bzw. parallel zu der Drehachse 43 der Spindel 35, wobei sie jeweils mit ihren freien Enden 57 zugeordneten Anlageflächen an der umlaufenden Steuerkante 78 des Lochscheibenteils 141 durch die Federkräfte der Federn 39 angedrückt gehalten werden bzw. sind.

Um andererseits eine Bewegung des Kolbens 22 und damit der Kolbenstange 23 relativ zu dem Zylinder 22 in der Einfahrrichtung 27 zu erreichen, wird der hier mit Rücklaufkanal 87 bezeichnete Kanal mit Druckmittel beaufschlagt, d. h. es wird mithilfe der in den Figuren nicht näher gezeigten Pumpe durch den Rücklaufkanal 87 ein Druckmittel zugeführt. Dadurch steigt der Druck in den nachgeordneten Kanälen, d. h. insbesondere in dem Schaltkanal 88 für das Lasthalte-Senkbrems-Ventil 150, in dem Schaltkanal 47 zur hydraulischen Betätigung der Verriegelungsbolzen 40 sowie in dem in die zweite Arbeitskammer 45 mündenden Arbeitskanal 48 an. Weil das Lasthalte-Senkbrems-Ventil 150 federdruckbeaufschlagt derart eingestellt ist, dass dieses erst ab einem bestimmten Druck öffnet, ab dem das Druckmittel von dem Einlass 153 zu dem Auslass 154 des Lasthalte-Senkbrems-Ventils 150 strömen kann, bewirkt ein Druckanstieg in dem Rücklaufkanal 87 zunächst, dass das als fluides Arbeitsmittel dienende fluide Druckmittel über den Schaltkanal 47 in den Entriegelungsdruckraum 85 bzw. in die Verriegelungsausnehmungen 38 strömt, wodurch die etwaig darin eingreifenden Verriegelungsbolzen 40 in Ausfahrrichtung 28 gegen die Federkräfte der Feder 39 zurückgedrückt werden, so dass also die Spindel 35 zunächst entriegelt wird. Im Zuge eines in dem Rücklaufkanal 87 weiter ansteigenden Druckes öffnet das Lasthalte-Senkbrems-Ventil 150, wodurch eine Bewegung des Kolbens 22 in Einfahrrichtung 27 ermöglicht wird, weil dann das sich in der ersten Arbeitskammer 33 befindliche Arbeitsmedium über den Kanal 49 durch das Lasthalte-Senkbrems-Ventil 150 hindurch in den Vorlaufkanal 86 strömen kann. Durch den vermittels des Lasthalte-Senkbrems-Ventils 150 stets wirkenden Gegendruck wird ein Voreilen des Kolbens 22 in Einfahrrichtung 27 mit Sicherheit vermieden. Dabei wird aufgrund der Fluidverbindung zwischen der Arbeitskammer 33 und dem Fluid-Gleitlagerraum 123 über den Zuleitungskanal 100 das Fluid-Gleitlager 122 mit dem unter Druck stehenden Druckmittel beaufschlagt, wobei der dann dort herrschende Druck eine Ausbildung bzw. Schmierung des Fluid-Gleitlagers 122 ermöglicht bzw. bewirkt. Zu diesem Zwecke bzw. unterstützend kann die Stütz- und Lagerfläche 129 des Stütz- und Lagerkörpers 124 mit Hilfe des Druckmittels zumindest zeitweise mit Hilfe des Druckmittels von der Gegen-Stütz- und -Lagerfläche 131 der Gleitlagerscheibe 110 abheben bzw. abgehoben werden.

Nichts anderes gilt im Falle eines Haltens des Kolbens 22 in einer gewünschten Hubstellung. Denn dann wird der Kolben 22 von Druckmittel, das sich in den beiden Arbeitskammern 33 und 45 sowie mit diesen fluidverbundenen Kanälen 49 und 48 befindet, "eingespannt" gehalten. Zugleich wird wiederum aufgrund der Fluidverbindung zwischen der Arbeitskammer 33 und dem Fluid-Gleitlagerraum 123 über den Zuleitungskanal 100 das Fluid-Gleitlager 122 mit dem unter Druck stehenden Druckmittel beaufschlagt, so dass selbst unter zulässigen hohen statischen Lasten, die von dem Verriegelungszylinder 20 gehalten bzw. bewegt werden sollen, das Fluid-Gleitlager 122 stets geschmiert bzw. ausgebildet ist, wobei der Stütz-und Lagerkörper 124 zumindest zeitweise, vorzugsweise die überwiegende Zeit, gegebenenfalls auch ständig, von der Gleitlagerscheibe 110 im Kopf 31 des Zylinders 21, vorzugsweise bzw. zumindest im Wesentlichen, abgehoben ist. In diesem Fall werden also die mithilfe des Verriegelungszylinders 20 zu haltende statische Last und die diesbezüglich auf die Spindel 35 übertragenen Axialkräfte im Wesentlichen über den Kolben 22 und das diesen beaufschlagende Druckmittel und über die benachbarten Zylinderwandungen aufgenommen.

Wenn die erfindungsgemäße Fluid-Gleitlagerung im Unterschied zu dem in den Figuren veranschaulichten Ausführungsbeispiel der Erfindung nicht bei auf Druck sondern bei einem auf Zug verriegelnden Verriegelungszylinder eingesetzt werden soll, wäre eine Fluidverbindung von dem Fluid-Gleitlagerraum 123 zu der anderen Arbeitskammer 45 bzw. zu dem in diese mündenden Arbeitskanal 48 herzustellen. Diese Fluidverbindung könnte zweckmäßigerweise über eine separate Zuleitung erfolgen. Wenn die erfindungsgemäße Fluid-Gleitlagerung bei einem Verriegelungszylinder eingesetzt werden soll, der sowohl auf Zug als auch auf Druck verriegelt, wäre zusätzlich noch ein Wechselventil oder dergleichen einzusetzen.

### BEZUGSZEICHENLISTE

| | | | |
|---|---|---|---|
| 20 | Verriegelungs- | 44 | (erste) Seite von 22 |
| | zylinder | 45 | (zweite) Arbeits- |
| 21 | Zylinder | | kammer |
| 22 | Kolben | 46 | (zweite) Seite/ |
| 23 | Kolbenstange | | Stirnseite von 22 |
| 24 | Ausnehmung | 47 | Schaltkanal |
| 25 | Befestigungselement | 48 | Arbeitskanal |
| 26 | Befestigungselement | 49 | Arbeitskanal |
| 27 | zweite Richtung/ | 50 | Außenkontur von 40 |
| | Einfahrrichtung/ | 51 | (erste) Drehrichtung |
| | Entriegelungs- | 52 | (zweite) Drehrich- |
| | richtung) | | tung |
| 28 | erste Richtung/ | 53 | Zylinderboden |
| | Ausfahrrichtung | 54 | Sperrklinken- |
| 29 | Längsachse von 21 | | mechanismus |
| 30 | Deckel | 55 | Kanal |
| 31 | Kopf (Deckel) von 21 | 56 | Verriegelungseinheit |
| 32 | Ansatz | 57 | freies Ende/Verrie- |
| 33 | (erste) Arbeits- | | gelungsende von 40 |
| | kammer | 58 | Wirkfläche von 40 |
| 34 | Kolbengewinde/Innen- | 59 | federseitiges Ende |
| | gewinde) | | von 40 |
| 35 | Spindel | 60 | Stütz- und Anlage- |
| 36 | Spindelgewinde/ | | fläche |
| | Außengewinde | 61 | Stufe |
| 37 | nicht selbsthemmen- | 62 | Lager |
| | des Gewinde | 63 | Ringdichtung |
| 38 | Verriegelungs- | 64 | Ringdichtung |
| | ausnehmung | 65 | Ansatz |
| 38.1 | | 66 | Ansatz |
| bis | | 67 | freies Ende von 35 |
| 38.6 | Verriegelungs- | 68 | Ringdichtung |
| | ausnehmung | 69 | Zylinderbolzen |
| 39 | Feder | 70 | Wandteil von 38 |
| 40 | Verriegelungsbolzen | 71 | Durchströmspalt |
| 40.1 | Verriegelungsbolzen | 72 | Wandteil |
| 40.2 | Verriegelungsbolzen | 73 | Umfangskreis |
| 41 | Verriegelungs- | 74 | Längsachse |
| | stellung | | von 40 |
| 42 | Verriegelungskörper | 75 | Lagerausnehmung |
| 42.1 | Verriegelungskörper | | (Bohrung) |
| 42.2 | Verriegelungskörper | 76 | Stütz- und Anlage- |
| 43 | Drehachse von 35 | | stufe |
| 77 | Ende von 35 | 115 | Winkel |
| 78 | Steuerkante | 116 | (erster) Führungs- |
| 79 | Wandteil von 65 | | körper |
| 80 | Feder | 117 | (zweiter) Führungs- |
| 81 | Auslaufschräge | | körper |
| 81.1 | | 118 | Ringnut für 116 |
| bis | | 119 | Ringnut für 117 |
| 81.6 | Auslaufschräge | 120 | (erstes) Axiallager |
| 82 | Rückschlagventil | 121 | (zweites) Axiallager |
| 83 | Rückschlagventil | 122 | Fluid-Gleitlager/ |
| 84 | Kanal | | hydrostatisches |
| 85 | Entriegelungsraum | | Gleitlager |
| 86 | Vorlaufkanal | 123 | Fluid-Gleitlagerraum |
| 87 | Rücklaufkanal | 124 | Stützkörper/Stütz- |
| 88 | Schaltkanal | | und Lagerkörper |
| 89 | Innenkontur von 75 | 125 | Kreisfläche |
| 90 | Lagerflansch | 125.1 | |
| 91 | Spalt | bis | |
| 92 | Ausnehmung | 125.6 | Kreisfläche |
| 93 | Federabschnitt | 126 | Umfang von 124 |
| 94 | Innenfläche von 60 | 127 | Ringlager |
| 95 | Ende von 39 | 128 | freies Ende von 124 |
| 96 | Ende von 39 | 129 | Stützfläche/Stütz- |
| 97 | (Ring-)Dichtfläche, | | und Lagerfläche |
| | Anschlagfläche | | von 124 |
| 98 | Anschlag- und Gegen- | 130 | Ausnehmung |
| | dichtfläche | 131 | Gegen-Stützfläche/ |
| 99 | Stirnkante | | Gegen-Stütz und |
| 100 | Zuleitungskanal | | -Lagerfläche |
| 100.1 | Zuleitungskanalteil | 132 | Ausnehmungsrand |
| 101.2 | Zuleitungskanalteil | 133 | Ringnut für 63 |
| 101 | (erste) Zuleitungs- | 134 | Innenfläche von 66 |
| | kanalöffnung | 135 | Ringnut für 64 |
| 102 | (zweite) Zuleitungs- | 136 | Abstand/Breite |
| | kanalöffnung | | einer Ringfläche |
| 103 | Öffnungsrand von 102 | 137 | Wälzlager |
| 104 | Axialkanal | 138 | Nadellager |
| 104.1 | Axialkanalteil | 139 | trapezförmiger |
| 104.2 | Axialkanalteil | | Querschnitt |
| 105 | (Ring-)Dichtung | 141 | Lochscheibenteil |
| 106 | Quer-/Radialkanal | 142 | Umfangsrichtung |
| 107 | Abzweigkanal | 150 | Lasthalte-Senkbrems- |
| 108 | Außenrandbereich | | Mittel (Lasthalte- |
| 109 | Randbereich | | Senkbrems-Ventil) |
| 110 | Gleitlagerscheibe | 153 | Einlass von 150 |
| 111 | Ringnut für 105 | 154 | Auslass von 150 |
| 112 | Außenfläche von 124 | 155 | Steueranschluss |
| 113 | Fluid-Aufnahmeraum | | von 150 |
| 114 | Absatz | 156 | Rückströmsperrmittel |
| 173 | Sperrglied von 156 | | |
| 175 | erster Verriege | | |
| | -lungskörper (Gegen- | | |
| | Verriegelungskörper) | | |

## Patentansprüche

1. Verriegelungszylinder (20) mit einem Zylinder (21) und einem Kolben (22), der mithilfe eines einer Seite (44, 46) des Kolbens (22) über einen Arbeitskanal (49) oder beiden Seiten (44, 46) des Kolbens (22) über diesen Seiten (44, 4G) zugeordnete Arbeitskanäle (48, 49) zuführbaren fluiden Druckmittels parallel zur Längsachse (29) des Zylinders (21) in eine erste Richtung (28) und in eine zweite Richtung (27) entgegengesetzt zu der ersten Richtung (28) bewegbar ist, und der mit einem Kolbengewinde (34) versehen ist, das unter Ausbildung eines nicht selbsthemmenden Gewindes (37) mit einem Spindelgewinde (36) einer mechanisch verriegelbaren Spindel (35) in Eingriff steht, die um eine parallel zur Längsachse (29) des Zylinders (21) angeordnete Drehachse (43) drehbar und relativ zu dem Zylinder (21) in Axialrichtung bzw. parallel zu ihrer Drehachse (43) bewegbar ist, wobei wenigstens zwei in einen gegenseitigen Verriegelungseingriff überführbare Verriegelungskörper (175; 42; 42.1, 42.2) vorgesehen sind, von denen wenigstens ein erster Verriegelungskörper (175) drehfest mit der Spindel (35) verbunden ist und von denen wenigstens ein zweiter Verriegelungskörper (42; 42.1, 42.2) mit dem Zylinder (21) verbunden ist, wobei wenigstens einer der Verriegelungskörper (42; 42.1, 42.2) relativ zu dem Zylinder (21) bewegbar an einem Lager (62) gelagert ist und mithilfe einer Federkraft wenigstens einer Feder (39) von einer Entriegelungsstellung, in der die Spindel (35) um ihre Drehachse (43) drehbar ist, in eine Verriegelungsstellung (41) überführbar ist, in welcher er mit einem anderen, einen Gegenverriegelungskörper bildenden verriegelungskörper (175) der Verrieglungskörper (175; 42; 42.1, 42.2) unter Ausbildung einer unidirektionalen oder bidirektionalen Verriegelung in einem Verriegelungseingriff steht, so dass dann eine Drehung der Spindel (35) um ihre Drehachse (43) in wenigstens eine Drehrichtung (51) blokkiert ist, und wobei der relativ zu dem Zylinder (21) bewegbare Verriegelungskörper (42; 42.1, 42.2) mit Hilfe eines einem Entriegelungsraum (85) zuführbaren fluiden Arbeitsmittels entgegen der Federkraft der Feder (39) von der Verriegelungsstellung (41) in die Entriegelungsstellung überführbar ist, und wobei die Spindel (35) an wenigstens zwei Axiallagern (120, 121) gelagert ist, von denen ein erstes Axiallager (120) dazu bestimmt ist, in die erste Richtung (28) auf die Spindel (35) wirkende Axialkräfte aufzunehmen, und von denen ein zweites Axiallager (121) dazu bestimmt ist, in die zweite Richtung (27) auf die Spindel (35) wirkende Axialkräfte aufzunehmen, und wobei die Spindel (35) mit einem Stützkörper (124) verbunden oder ausgebildet ist, der eine Stützfläche (129) aufweist, der eine mit dem Zylinder (21) verbundene Gegen-Stützfläche (131) gegenüber liegt, wobei der Stützkörper (124) dazu bestimmt ist, über seine Stützfläche (129) in der zweiten Richtung (27) auf die Spindel (35) wirkende Axialkräfte aufzunehmen,
**dadurch gekennzeichnet,**
**dass** der Stützkörper (124) als Stütz- und Lagerkörper (124) gestaltet ist, wobei dessen als Stütz- und Lagerfläche (129) ausgebildete Stützfläche (129) und die als Gegen-Stütz- und -Lagerfläche (131) ausgebildele Gegen-Stützfläche (131) das zweite Axiallager (121) ausbilden, das als ein Fluid-Gleitlager (122) gestaltet ist, das über einen Zuleitungskanal (100) mit einem bzw. mit dem fluiden Druckmittel beaufschlagbar bzw. beaufschlagt ist, wobei das Fluid-Gleitlager (122) gegenüber dem Lager (62) für den relativ zu dem Zylinder bewegbaren Verriegelungskörper (40; 40.1, 40,2) mit Hilfe einer an dem Stütz- und Lagerkörper (124) anliegenden Dichtung (105) abgedichtet ist.

2. Verriegelungszylinder nach Anspruch 1, **dadurch gekennzeichnet, dass** der Zuleitungskanal (100) mit dem Arbeitskanal (49) oder mit einem Arbeitskanal der Arbeitskanäle (48, 49) in Fluidverbindung bringbar bzw. fluidverbunden ist.

3. Verriegelungszylinder nach Anspruch 1 oder 2, **dadurch gekennzeichnet, dass** der Zuleitungskanal (100) in eine zwischen dem Zylinder (21) und dem Kolben (22) ausgebildete und von einer Seite (46) des Kolbens (22) begrenzte Arbeitskammer (33) mündet, in welche der Arbeitskanal (49) mündet.

4. Verriegelungszylinder nach wenigstens einem der Ansprüche 1 bis 3, **dadurch gekennzeichnet, dass** der Zuleitungskanal (100) im Wesentlichen oder ausschließlich in dem Stütz- und Lagerkörper (124) und/oder in der Spindel (35) angeordnet ist bzw. verläuft.

5. Verriegelungszylinder nach wenigstens einem der Ansprüche 1 bis 4, **dadurch gekennzeichnet, dass** der Zuleitungskanal (100) im Bereich der Stütz- und Lagerfläche (129) des Stütz- und Lagerkörpers (124) mündet.

6. Verriegelungszylinder nach wenigstens einem der Ansprüche 1 bis 5, **dadurch gekennzeichnet, dass** der Zuleitungskanal (100) an einer Zuleitungskanalöffnung (102) mündet, deren Öffnungsrand (103), vorzugsweise im Wesentlichen vollumfänglich oder vollumfänglich, von der Stütz- und Lagerfläche (129) des Stütz- und Lagerkörpers (124) begrenzt ist.

7. Verriegelungszylinder nach wenigstens einem der Ansprüche 1 bis 6, **dadurch gekennzeichnet, dass** der Zuleitungskanal (100) mit einem Axialkanal (104) gestaltet ist, der koaxial, vorzugsweise symmetrisch, insbesondere rotationssymmetrisch, zu der Drehachse (43) der Spindel (35) ausgebildet ist.

8. Verriegelungszylinder nach wenigstens einem der Ansprüche 1 bis 8, **dadurch gekennzeichnet, dass** der Zuleitungskanal (100) mit wenigstens einem in dem Stütz- und Lagerkörper (124) angeordneten, sich quer, vorzugsweise radial, von dem Zuleitungskanal (100) weg erstreckenden Abzweigkanal (107) fluidverbunden ist.

9. Verriegelungszylinder nach Anspruch 8, **dadurch gekennzeichnet, dass** der Abzweigkanal (107) in einem Außenrandbereich (108) der Stütz- und Lagerfläche (129) und/oder in einem sich an den Außenrandbereich (108) der Stütz- und Lagerfläche (129) anschließenden Randbereich (109) des Stütz- und Lagerkörpers (124), insbesondere an dem kreiszylindrischen Umfang (126) des Stütz- und Lagerkörpers (124), mündet.

10. Verriegelungszylinder nach wenigstens einem der Ansprüche 1 bis 9, **dadurch gekennzeichnet, dass** die Gegen-Stütz- und -Lagerfläche (131) mit einer oder als eine Gleitlagerscheibe (110) gebildet ist.

11. Verriegelungszylinder nach wenigstens einem der Ansprüche 1 bis 10, **dadurch gekennzeichnet, dass** das Fluid-Gleitlager (122) auch mit Hilfe einer bzw. der an dem Stütz- und Lagerkörper (124) anliegenden Dichtung (105) gegenüber dem mit dem fluiden Arbeitsmittel beaufschlagbaren bzw. beaufschlagten Entriegelungsraum (85) abgedichtet ist.

12. Verriegelungszylinder nach wenigstens einem der Ansprüche 1 bis 11, **dadurch gekennzeichnet, dass** die Dichtung (105) als Ringdichtung ausgebildet ist und in einer, vorzugsweise nach außen offenen, Ringnut (111) des Stütz- und Lagerkörpers (124) aufgenommen ist.

13. Verriegelungszylinder nach wenigstens einem der Ansprüche 1 bis 12, **dadurch gekennzeichnet, dass** das Fluid-Gleitlager (122) bei einer Bewegung des Kolbens (22) in der ersten Richtung (28) und bei einer Bewegung des Kolbens (22) in der zweiten Richtung (27) sowie bei bzw. während eines Anhaltens des Kolbens (22) und auch in wenigstens einer, vorzugsweise in jeder, Haltestellung des Kolbens (22) zwischen seinen beiden Maximalstellungen mit dem Druckmittel beaufschlagt ist bzw. wird.

14. Verriegelungszylinder nach wenigstens einem der Ansprüche 1 bis 12, **dadurch gekennzeichnet, dass** die Stütz- und Lagerfläche (129) bei einer Bewegung des Kolbens (22) in der ersten Richtung (28) und bei einer Bewegung des Kolbens (22) in der zweiten Richtung (27) sowie bei bzw. während eines Anhaltens des Kolbens (22) und auch in wenigstens einer, vorzugsweise in jeder, Haltestellung des Kolbens (22) zwischen seinen beiden Maximalstellungen zumindest zeitweise, vorzugsweise überwiegend, von der Gegen-Stütz- und -Lagerfläche (131) abgehoben ist bzw. wird.

15. Verriegelungszylinder nach wenigstens einem der Ansprüche 1 bis 12, **dadurch gekennzeichnet, dass** das Fluid-Gleitlager (122) bei einer Bewegung des Kolbens (22) in der ersten Richtung (28) und bei einer Bewegung des Kolbens (22) in der zweiten Richtung (27) sowie bei bzw. während eines Anhaltens des Kolbens (22) und auch in wenigstens einer, vorzugsweise in jeder, Haltestellung des Kolbens (22) zwischen seinen beiden Maximalstellungen mit dem Druckmittel beaufschlagt ist bzw. wird und dass die Stütz- und Lagerfläche (129) bei einer Bewegung des Kolbens (22) in der ersten Richtung (28) und bei einer Bewegung des Kolbens (22) in der zweiten Richtung (27) sowie bei bzw. während eines Anhaltens des Kolbens (22) und auch in wenigstens einer, vorzugsweise in jeder, Haltestellung des Kolbens (22) zwischen seinen beiden Maximalstellungen zumindest zeitweise, vorzugsweise überwiegend, von der Gegen-Stütz- und -Lagerfläche (131) abgehoben ist bzw. wird.

16. Verriegelungszylinder nach wenigstens einem der Ansprüche 1 bis 15, **dadurch gekennzeichnet, dass** die Stütz- und Lagerfläche (129), vorzugsweise ausschließlich, mit Hilfe des Druckmittels von der Gegen-Stützund -Lagerfläche (131) abgehoben ist bzw. wird.

## Claims

1. Locking cylinder (20) with a cylinder (21) and a piston (22), which is movable parallel to the longitudinal axis (29) of the cylinder (21) in a first direction (28) and in a second direction (27) opposite to the first direction (28) with the help of a fluid pressure medium able to be fed to a side (44, 46) of the piston (22) via a working channel (49) or to both sides (44, 46) of the piston (22) via working channels (48, 49) associated with these sides (44, 46) and which is provided with a piston thread (34) disposed in engagement, while forming a non-self-locking thread (37), with a spindle thread (36) of a mechanically lockable spindle (35) which is rotatable about an axis (43) of rotation arranged parallel to the longitudinal axis (29) of the cylinder (21) and which is movable relative to the cylinder (21) in axial direction or parallel to the axis (43) of rotation thereof, wherein at least two locking bodies (175; 42; 42.1, 42.2) transferrable into mutual locking engagement are provided, of which at least a first locking body (175) is connected with the spindle (35) to be secure against relative rotation and of which at least a second locking body (42; 42.1, 42.2) is connected with the cylinder (21), wherein at least one of the locking bodies (42; 42.1, 42.2) is mounted at a bearing (62) to be movable relative to the cylinder (21) and is transferrable with the help of a spring force of at least one spring (39) from an unlocking setting in which the spindle (35) is rotatable about the axis (43) of rotation thereof to a locking setting (41) in which it is disposed in locking engagement with another locking body (175), which forms a counter-locking body, of the locking bodies (175; 42; 42.1, 42.2) with formation of a unidirectional or bidirectional locking so that then a rotation of the spindle (35) about the axis (43) of rotation thereof is blocked in at least one rotational direction (51), and wherein the locking body (42; 42.1, 42.2) movable relative to the cylinder (21) is transferrable from the locking setting (41) to the unlocking setting with the help of a fluid working medium, which can be fed to an unlocking chamber (85), against the spring force of the spring (39), and wherein the spindle (35) is mounted at at least two axial bearings (120, 121), of which a first axial bearing (120) is intended for the purpose of accepting axial forces acting on the spindle (35) in the first direction (28) and of which a second axial bearing (121) is intended for the purpose of accepting axial forces acting on the spindle (35) in the second direction (27), and wherein the spindle (35) is connected or formed with a support body (124) having a support surface (129) disposed opposite a counter-support surface (131) connected with the cylinder (21), wherein the support body (124) is intended for the purpose of accepting by way of its support surface (129) axial forces acting on the spindle (35) in the second direction (27), **characterised in that** the support body (124) is formed as a supporting and bearing body (124), wherein the support surface (129) constructed as supporting and bearing surface (129) and the counter-support surface (131) constructed as counter-supporting and counter-bearing surface (131) form the second axial bearing (121), which is designed as a fluid slide bearing (122) which can be acted on or is acted on by a or the fluid pressure medium via a feed channel (100), wherein the fluid slide bearing (122) is sealed relative to the bearing (62) for the locking body (40; 40.1, 40.2), which is movable relative to the cylinder, with the help of a seal (105) bearing against the supporting and bearing body (124).

2. Locking cylinder according to claim 1, **characterised in that** the feed channel (100) is or can be brought into fluid connection with the working channel (49) or with one working channel of the working channels (48, 49).

3. Locking cylinder according to claim 1 or 2, **characterised in that** the feed channel (100) opens into a working chamber (33), which is formed between the cylinder (21) and the piston (22) and is bounded by a side (46) of the piston (22) and into which the working channel (49) opens.

4. Locking cylinder according to at least one of claims 1 to 3, **characterised in that** the feed channel (100) is arranged or extends substantially or exclusively in the supporting and bearing body (124) and/or in the spindle (35).

5. Locking cylinder according to at least one of claims 1 to 4, **characterised in that** the feed channel (100) opens in the region of the supporting and bearing surface (129) of the supporting and bearing body (124).

6. Locking cylinder according to at least one of claims 1 to 5, **characterised in that** the feed channel (100) opens at a feed channel opening (102), the opening edge (103) of which is bounded preferably substantially over the full circumference, or over the full circumference, by the supporting and bearing surface (129) of the supporting and bearing body (124).

7. Locking cylinder according to at least one of claims 1 to 6, **characterised in that** the feed channel (100) is formed with an axial channel (104) which is constructed coaxially, preferably symmetrically, particularly rotationally symmetrically, with respect to the axis (43) of rotation of the spindle (35).

8. Locking cylinder according to at least one of claims 1 to 8, **characterised in that** the feed channel (100) is disposed in fluid connection with at least one branch channel (107) which is arranged in the supporting and bearing body (124) and which extends transversely, preferably radially, away from the feed channel (100).

9. Locking cylinder according to claim 8, **characterised in that** the branch channel (107) opens in an outer edge region (108) of the supporting and bearing surface (129) and/or in an edge region (109), which is connected with the outer edge region (108) of the supporting and bearing surface (129), of the supporting and bearing body (124), particularly at the circularly cylindrical circumference (126) of the supporting and bearing body (124).

10. Locking cylinder according to at least one of claims 1 to 9, **characterised in that** the counter-supporting and counter-bearing surface (131) is formed with or as a slide bearing disc (110).

11. Locking cylinder according to at least one of claims 1 to 10, **characterised in that** the fluid slide bearing (122) is also sealed relative to the unlocking chamber (85), which can be acted on or is acted on by the fluid working medium, with the help of a or the seal (105) bearing against the supporting and bearing body (124).

12. Locking cylinder according to at least one of claims 1 to 11, **characterised in that** the seal (105) is constructed as an annular seal and is received in an annular groove (111), which is preferably open towards the outside, of the supporting and bearing body (124).

13. Locking cylinder according to at least one of claims 1 to 12, **characterised in that** the fluid slide bearing (122) is or comes to be acted on by the pressure medium in the case of movement of the piston (22) in the first direction (28) and in the case of movement of the piston (22) in the second direction (27) as well as in the case of or during stopping of the piston (22) and also in at least one, preferably in each, stop setting of the piston (22) between its two maximum settings.

14. Locking cylinder according to at least one of claims 1 to 12, **characterised in that** the supporting and bearing surface (129) is lifted or comes to be lifted off the counter-supporting and counter-bearing surface (131) at least periodically, preferably predominantly, in the case of movement of the piston (22) in the first direction (28) and in the case of movement of the piston (22) in the second direction (27) as well as in the case of or during stopping of the piston (22) and also in at least one, preferably in each, stop setting of the piston (22) between its two maximum settings.

15. Locking cylinder according to at least one of claims 1 to 12, **characterised in that** the fluid slide bearing (122) is or comes to be acted on by the pressure medium in the case of movement of the piston (22) in the first direction (28) and in the case of movement of the piston (22) in the second direction (27) as well as in the case of or during stopping of the piston (22) and also in at least one, preferably in each, stop setting of the piston (22) between its two maximum settings and that the supporting and bearing surface (129) is lifted or comes to be lifted off the counter-supporting and counter-bearing surface (131) at least periodically, preferably predominantly, in the case of movement of the piston (22) in the first direction (28) and in the case of movement of the piston (22) in the second direction (27) as well as in the case of or during stopping of the piston (22) and also in at least one, preferably in each, stop setting of the piston (22) between its two maximum settings.

16. Locking cylinder according to at least one of claims 1 to 15, **characterised in that** the supporting and bearing surface (129) is or comes to be lifted off the counter-supporting and counter-bearing surface (131), preferably exclusively, with the help of the pressure medium.

## Revendications

1. Vérin de verrouillage (20), comportant un cylindre (21) et un piston (22) qui peut être déplacé parallèlement à l'axe longitudinal (29) du cylindre (21) dans une première direction (28) et dans une deuxième direction (27) opposée à la première direction (28), au moyen d'un milieu sous pression fluide pouvant être acheminé vers un côté (44, 46) du piston (22) via un conduit de travail (49) ou vers les deux côtés (44, 46) du piston (22) via des conduits de travail (48, 49) associés à ces côtés (44, 46), et qui est muni d'un filetage (34) qui, moyennant la formation d'un filetage (37) non autobloquant, engrène avec un filetage (36) d'une broche (35), qui est apte à être verrouillée mécaniquement et qui est apte à tourner autour d'un axe de rotation (43), orienté parallèlement à l'axe longitudinal (29) du cylindre (21), et par rapport au cylindre (21) dans la direction axiale ou parallèlement à son axe de rotation (43), sachant qu'il est prévu au moins deux corps de verrouillage (175 ; 42 ; 42.1, 42.2), qui peuvent être amenés mutuellement en prise de verrouillage, parmi lesquels au moins un premier corps de verrouillage (175) est relié de manière solidaire en rotation avec la broche (35) et parmi lesquels au moins un deuxième corps de verrouillage (42 ; 42.1, 42.2) est relié au cylindre (21), sachant qu'au moins l'un des corps de verrouillage (42 ; 42.1, 42.2) est monté mobile par rapport au cylindre (21) sur un palier (62) et, au moyen d'une force d'au moins un ressort (39), peut être amené d'une position de déverrouillage, dans laquelle la broche (35) est apte à tourner autour de son axe de rotation (43), dans une position de verrouillage (41), dans laquelle il est en prise de verrouillage avec un autre corps de verrouillage (175), formant un corps de verrouillage antagoniste, parmi les corps de verrouillage (175 ; 42 ; 42.1, 42.2), moyennant la formation d'un verrouillage unidirectionnel ou bidirectionnel, de telle sorte qu'une rotation de la broche (35) autour de son axe de rotation (43) est alors bloquée dans au moins un sens de rotation (51), et le corps de verrouillage (42 ; 42.1, 42.2), mobile par rapport au cylindre (21), pouvant être amené au moyen d'un milieu de travail fluide, propre à être acheminé dans un espace de déverrouillage (85), dans le sens opposé à la force du ressort (39) depuis la position de verrouillage (41) dans la position de déverrouillage, et la broche (35) étant montée sur au moins deux paliers axiaux (120, 121), parmi lesquels un premier palier axial (120) est destiné à absorber les forces axiales exercées dans la première direction (28) sur la broche (35), et parmi lesquels un deuxième palier axial (121) est destiné à absorber les forces axiales exercées dans la deuxième direction (27) sur la broche (35), et la broche (35) étant assemblée ou réalisée avec un corps de support (124) qui comporte une surface de support (129), à laquelle fait face une surface de support antagoniste (131) reliée au cylindre (21), ledit corps de support (124) étant destiné à absorber des forces axiales exercées dans la deuxième direction (27) sur la broche (35),
**caractérisé en ce que**
le corps de support (124) est configuré sous forme de corps de support et de palier (124), sachant que la surface de support (129) de celui-ci est réalisée sous forme de surface de support et de palier (129) et la surface de support antagoniste (131), réalisée sous forme de surface de support et de palier antagoniste (131), forme le deuxième palier axial (121) qui est conçu sous forme de palier fluide (122), qui peut être sollicité ou est sollicité par un ou le milieu sous pression fluide via un conduit d'admission (100), ledit palier fluide (122) étant rendu étanche par rapport au palier (62) pour le corps de verrouillage (40 ; 40.1, 40.2) mobile par rapport au cylindre (21), au moyen d'une garniture d'étanchéité (105) en appui contre le corps de support et palier (124).

2. Vérin de verrouillage selon la revendication 1, **caractérisé en ce que** le conduit d'admission (100) peut être amené en liaison fluidique ou est en liaison fluidique avec le conduit de travail (49) ou avec un conduit de travail parmi les conduits de travail (48, 49).

3. Vérin de verrouillage selon la revendication 1 ou 2, **caractérisé en ce que** le conduit d'admission (100) débouche dans une chambre de travail (33), formée entre le cylindre (21) et le piston (22) et délimitée par un côté (46) du piston (22), dans laquelle chambre débouche le conduit de travail (49).

4. Vérin de verrouillage selon au moins l'une quelconque des revendications 1 à 3, **caractérisé en ce que** le conduit d'admission (100) est agencé ou s'étend sensiblement ou exclusivement dans le corps de support et palier (124) et/ou dans la broche (35).

5. Vérin de verrouillage selon au moins l'une quelconque des revendications 1 à 4, **caractérisé en ce que** le conduit d'admission (100) débouche dans la zone de la surface de support et palier (129) du corps de support et palier (124).

6. Vérin de verrouillage selon au moins l'une quelconque des revendications 1 à 5, **caractérisé en ce que** le conduit d'admission (100) débouche au niveau d'une ouverture (102) du conduit d'admission, dont le bord (103) est délimité, de préférence à peu près sur tout le pourtour ou sur tout le pourtour, par la surface de support et palier (129) du corps de support et palier (124).

7. Vérin de verrouillage selon au moins l'une quelconque des revendications 1 à 6, **caractérisé en ce que** le conduit d'admission (100) est conçu avec un conduit axial (104), qui est réalisé coaxialement, de préférence symétriquement, en particulier à symétrie de révolution, par rapport à l'axe de rotation (43) de la broche (35).

8. Vérin de verrouillage selon au moins l'une quelconque des revendications 1 à 8, **caractérisé en ce que** le conduit d'admission (100) est en liaison fluidique avec au moins un conduit de dérivation (107), agencé dans le corps de support et palier (124) et s'étendant transversalement, de préférence radialement, en s'écartant du conduit d'admission (100).

9. Vérin de verrouillage selon la revendication 8, **caractérisé en ce que** le conduit de dérivation (107) débouche dans une zone de bordure extérieure (108) de la surface de support et palier (129) et/ou dans une zone de bordure (109) du corps de support et palier (124), adjacente à la zone de bordure extérieure (108) de la surface de support et palier (129), en particulier sur la périphérie (126) cylindrique circulaire du corps de support et palier (124).

10. Vérin de verrouillage selon au moins l'une quelconque des revendications 1 à 9, **caractérisé en ce que** la surface de support et palier antagoniste (131) est formée avec un disque de palier lisse (110) ou sous la forme d'un tel disque.

11. Vérin de verrouillage selon au moins l'une quelconque des revendications 1 à 10, **caractérisé en ce que** le palier fluide (122) peut également être rendu étanche au moyen d'une ou de la garniture d'étanchéité (105) en appui contre le corps de support et palier (124), par rapport à l'espace de déverrouillage (85), apte à être sollicité ou sollicité par le milieu de travail fluide.

12. Vérin de verrouillage selon au moins l'une quelconque des revendications 1 à 11, **caractérisé en ce que** la garniture d'étanchéité (105) est réalisée sous forme de joint annulaire ou est logée dans une rainure annulaire (111), de préférence ouverte vers l'extérieur, du corps de support et palier (124).

13. Vérin de verrouillage selon au moins l'une quelconque des revendications 1 à 12, **caractérisé en ce qu'**en présence d'un mouvement du piston (22) dans la première direction (28) et en présence d'un mouvement du piston (22) dans la deuxième direction (27), ainsi qu'en présence ou pendant une immobilisation du piston (22) et également dans au moins une, de préférence dans chaque position d'immobilisation du piston (22) entre ses deux positions maximales, le palier fluide (122) est ou sera sollicité par le milieu sous pression.

14. Vérin de verrouillage selon au moins l'une quelconque des revendications 1 à 12, **caractérisé en ce qu'**en présence d'un mouvement du piston (22) dans la première direction (28) et en présence d'un mouvement du piston (22) dans la deuxième direction (27), ainsi qu'en présence ou pendant une immobilisation du piston (22) et également dans au moins une, de préférence dans chaque position d'immobilisation du piston (22) entre ses deux positions maximales, la surface de support et palier (129) est ou sera retirée au moins temporairement, de préférence la plupart du temps, de la surface de support et palier antagoniste (131).

15. Vérin de verrouillage selon au moins l'une quelconque des revendications 1 à 12, **caractérisé en ce qu'**en présence d'un mouvement du piston (22) dans la première direction (28) et en présence d'un mouvement du piston (22) dans la deuxième direction (27), ainsi qu'en présence ou pendant une immobilisation du piston (22) et également dans au moins une, de préférence dans chaque position d'immobilisation du piston (22) entre ses deux positions maximales, le palier fluide (122) est ou sera sollicité par le milieu sous pression, et **en ce qu'**en présence d'un mouvement du piston (22) dans la première direction (28) et en présence d'un mouvement du piston (22) dans la deuxième direction (27), ainsi qu'en présence ou pendant une immobilisation du piston (22) et également dans au moins une, de préférence dans chaque position d'immobilisation du piston (22) entre ses deux positions maximales, la surface de support et palier (129) est ou sera retirée au moins temporairement, de préférence la plupart du temps, de la surface de support et palier antagoniste (131).

16. Vérin de verrouillage selon au moins l'une quelconque des revendications 1 à 15, **caractérisé en ce que** la surface de support et palier (129) est ou sera retirée de la surface de support et palier antagoniste (131), de préférence exclusivement au moyen du milieu sous pression.
